(19) **Europäisches Patentamt / European Patent Office / Office européen des brevets**

(11) **EP 1 275 188 B1**

(12) **FASCICULE DE BREVET EUROPEEN**

(45) Date de publication et mention
de la délivrance du brevet:
**01.04.2009 Bulletin 2009/14**

(21) Numéro de dépôt: **01927978.5**

(22) Date de dépôt: **17.04.2001**

(51) Int Cl.:
*H02J 13/00* (2006.01)    *H04B 3/54* (2006.01)
*G01R 21/133* (2006.01)

(86) Numéro de dépôt international:
**PCT/FR2001/001173**

(87) Numéro de publication internationale:
**WO 2001/080398 (25.10.2001 Gazette 2001/43)**

(54) **PROCEDE ET DISPOSITIF DE CONTROLE D'HABILITATION D'UN APPAREIL ELECTRIQUE CONNECTE A UN RESEAU**

VERFAHREN UND VORRICHTUNG ZUR STEUERUNG DER BETRIEBSFREIGABE EINES AN EIN NETZWERK ANGESCHLOSSENEN ELEKTRISCHEN GERÄTES

METHOD AND DEVICE FOR MONITORING ENABLEMENT OF AN ELECTRICAL APPARATUS CONNECTED TO A POWER GRID

(84) Etats contractants désignés:
**AT BE CH CY DE DK ES FI FR GB GR IE IT LI LU MC NL PT SE TR**

(30) Priorité: **19.04.2000 FR 0005037**

(43) Date de publication de la demande:
**15.01.2003 Bulletin 2003/03**

(73) Titulaire: **Electricité de France**
**75008 Paris (FR)**

(72) Inventeurs:
• MARTIN, Fabrice
  F-78180 Montigny le Bretonneux (FR)
• FROEHLICH, Robert
  F-78380 Bougival (FR)
• DHERBECOURT, Yves
  F-92330 Sceaux (FR)

(74) Mandataire: **Loisel, Bertrand**
**Cabinet Plasseraud**
**52 rue de la Victoire**
**75440 Paris Cedex 09 (FR)**

(56) Documents cités:
WO-A-98/17013          US-A- 4 427 968
US-A- 5 691 715

• MENEZES ET AL: "HANDBOOK OF APPLIED CRYPTOGRAPHY" BOCA RATON, FL, CRC PRESS,US, 1997, pages 403-405,506-515,570, XP002165287 ISBN: 0-8493-8523-7

EP 1 275 188 B1

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

## Description

L'invention concerne un procédé et un dispositif de contrôle d'habilitation d'un appareil électrique connecté, ou couplé, à un réseau.

A l'heure actuelle, l'appareillage électrique tend à assurer l'exécution de fonctions ou prestations de services de plus en plus diverses et variées.

C'est en particulier le cas lorsque cet appareillage électrique est constitué par des appareils électroménagers dits produits bruns, tels que les récepteurs de télévision, de radio, les magnétoscopes, les chaînes à haute fidélité, ou produits blancs, réfrigérateurs, les machines de lavage de type lave-linge, lave-vaisselle ou autres, ou encore les appareils électriques de bureautique ou à usage domestique, tels que les micro-ordinateurs et leurs périphériques, imprimantes ou analogues.

Pour tous ces appareils, qui représentent une valeur patrimoniale importante pour chaque utilisateur, la notion d'habilitation recouvre non seulement la notion d'habilitation d'origine contractuelle à l'exécution de la fonction ou de la prestation de service à laquelle chaque appareil est destiné, mais également la notion d'habilitation d'origine légale à l'exécution de cette fonction ou de cette prestation de service au bénéfice du détenteur légal de l'appareil considéré, et non pas de tout intrus ayant subtilisé cet appareil ou, le cas échéant, les droits d'accès à la prestation de service associés à ce dernier.

Un procédé et un dispositif de contrôle d'habilitation d'un appareil électrique connecté à un réseau est décrit dans le document WO 0005820.

La présente invention a pour objet la mise en oeuvre d'un procédé et d'un dispositif de contrôle d'habilitation d'un appareil électrique connecté à un réseau, permettant, notamment, l'exécution d'une fonction de surveillance de la localisation de cet appareil électrique en un endroit déterminé d'un périmètre de surveillance, l'habilitation d'utilisation de cet appareil étant conférée à cet appareil lorsque ce dernier est situé à l'endroit déterminé précité de ce périmètre de surveillance, la non habilitation d'utilisation de cet appareil étant conférée à ce dernier sinon. D'une manière générale, on indique que la notion de réseau, auquel l'appareil électrique est connecté, couvre, d'une part, la notion de réseau communicant, et, d'autre part, la notion de réseau de distribution ou d'alimentation en énergie électrique. Ainsi, la notion de réseau communicant couvre tout type de réseau permettant d'assurer l'échange de messages entre l'appareil électrique et un site déterminé, tel que réseau ATM ou INTERNET, réseau GSM notamment.

De même, la notion de réseau de distribution ou d'alimentation en énergie électrique de l'appareil électrique couvre le réseau habitat, en aval du compteur, le réseau électrique de distribution en amont du compteur.

En outre, lorsque la technologie de communication par courants porteurs engendrés sur le réseau de distribution ou d'alimentation en énergie électrique est utilisé, ce réseau de distribution ou d'alimentation en énergie électrique constitue, en outre, un réseau communicant.

Un autre objet de la présente invention est également la mise en oeuvre d'un procédé et d'un dispositif de contrôle d'habilitation d'un appareil électrique permettant en outre l'exécution d'une fonction de surveillance de l'utilisation de cet appareil électrique eu égard à une ou plusieurs obligations contractuelles d'utilisation en vue d'une prestation de service, obligations conclues entre l'utilisateur habilité à bénéficier d'une telle prestation et toute entité habilitante, créancier de cette ou de ces obligations, l'habilitation d'utilisation de cet appareil étant conférée à ce dernier lorsque cette utilisation satisfait aux obligations contractuelles souscrites, la non habilitation d'utilisation de cet appareil étant conférée à ce dernier sinon.

Parmi les applications envisageables du procédé et du dispositif de contrôle objets de la présente invention, on peut citer notamment la protection contre le vol des appareils électriques connectés à un réseau, le contrôle d'accès à des services en ligne, notamment sur acquittement d'un abonnement ou dans certaines plages horaires, l'exécution de prestations de services à distance vis-à-vis d'un site central.

Le procédé de contrôle d'habilitation d'un appareil électrique connecté à un réseau, objet de la présente invention, est mis en oeuvre selon la revendication 1 et le dispositif de contrôle d'habilitation est realisé selon les revendications 14 et 16.

Le procédé et le dispositif de contrôle d'habilitation d'un appareil électrique connecté à un réseau, objets de la présente invention, seront mieux compris à la lecture de la description et à l'observation des dessins ci-après dans lesquels :

- la figure 1 représente, à titre illustratif, un organigramme des étapes de mise en oeuvre du protocole objet de la présente invention, entre un émetteur spécialisé et un appareil électrique connectés à un réseau ;
- la figure 2a représente, à titre illustratif, un diagramme de définition d'une zone ou périmètre de contrôle d'habilitation pour tout appareil électrique connecté à un réseau mettant en oeuvre le protocole objet de la présente invention ;
- la figure 2b représente, de manière illustrative, une forme particulière préférentielle des messages codés entre un appareil électrique et un émetteur spécialisé permettant la mise en oeuvre du protocole objet de la présente invention ;
- la figure 3a représente, à titre illustratif, différents processus de signature et de vérification de signature mis en oeuvre dans le cadre du protocole objet de la présente invention par l'émetteur spécialisé respectivement par un appareil électrique connectés à un réseau ;

- la figure 3b représente, à titre illustratif, différents processus de signature mis en oeuvre dans le cadre du protocole objet de la présente invention par l'émetteur spécialisé respectivement par un appareil électrique connectés à un réseau, dans le cas le plus spécifique où l'appareil électrique permet d'assurer, auprès d'un abonné, une prestation de service liée à la fourniture d'un fluide ou d'une alimentation en énergie ;
- la figure 4a représente, à titre illustratif, différents échanges de messages entre un émetteur spécialisé et un appareil électrique connectés à un réseau, le mode d'échange de ces messages étant monodirectionnel ou bidirectionnel ;
- la figure 4b représente, à titre purement illustratif, un mode de réalisation préférentiel d'un réseau, de type réseau basse tension de distribution d'énergie électrique, particulièrement adapté à l'échange de messages entre un émetteur spécialisé et différents appareils électriques connectés à ce réseau par courants porteurs ;

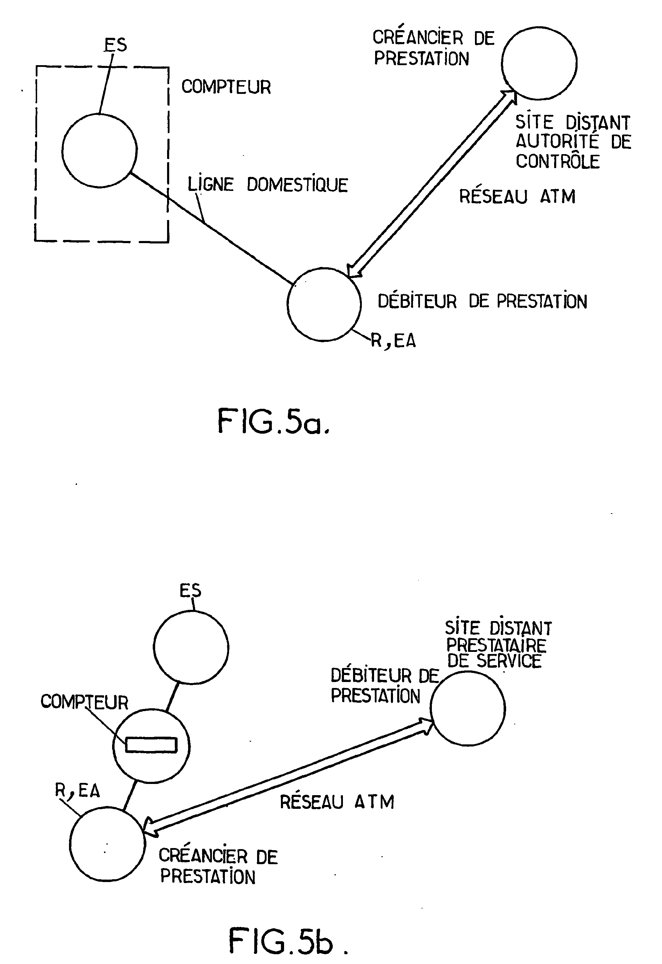

- la figure 5a représente, à titre illustratif, un exemple de mise en oeuvre du protocole objet de la présente invention dans le cadre d'une application de prestation de service telle que le télétravail, un émetteur spécialisé étant installé et connecté au réseau basse tension de distribution d'énergie électrique, au niveau du compteur de distribution d'énergie électrique, l'appareil électrique de l'abonné au service de distribution d'énergie électrique et au service de télétravail, dont ce dernier est débiteur, étant constitué par un ordinateur relié par un réseau ATM par exemple à un site distant jouant le rôle d'autorité de contrôle de la prestation de service de télétravail ou à tout le moins de créancier de cette prestation de service ;
- la figure 5b représente, à titre illustratif, un exemple de mise en oeuvre du protocole objet de la présente invention dans le cadre d'une application de prestation de service, telle qu'une intervention à distance, un émetteur spécialisé étant installé et connecté au réseau basse tension de distribution d'énergie électrique, au niveau du compteur de distribution d'énergie électrique de l'abonné au service d'intervention à distance, dont ce dernier est créancier, et constitué par tout appareil électrique justiciable de cette opération à distance, opération telle que relevé périodique à distance de la consommation de cet appareil électrique, intervention de maintenance lorsque cet appareil est un appareil informatique, cet appareil étant relié à un site distant du prestataire de service par un réseau ATM par exemple;
- la figure 6a représente, à titre illustratif, l'architecture d'un émetteur spécialisé conforme à l'objet de la présente invention plus particulièrement adapté à l'envoi de messages en communication monodirectionnelle ;
- la figure 6b représente, à titre illustratif, l'architecture d'un émetteur spécialisé conforme à l'objet de la présente invention et équipé d'un récepteur plus particulièrement adapté à l'envoi et à la réception de messages en communication bidirectionnelle ;
- la figure 7a représente, à titre illustratif, l'architecture d'un récepteur conforme à l'objet de la présente invention associé à un appareil électrique, ce type de récepteur étant plus particulièrement adapté à la réception de messages en communication monodirectionnelle émis, par exemple, par l'émetteur spécialisé décrit en liaison avec la figure 6a ;
- la figure 7b représente, à titre illustratif, l'architecture d'un récepteur conforme à l'objet de la présente invention associé à un appareil électrique, ce type de récepteur étant plus particulièrement adapté à l'échange de messages en communication bidirectionnelle avec un émetteur spécialisé équipé d'un récepteur tel que décrit en liaison avec la figure 6b.

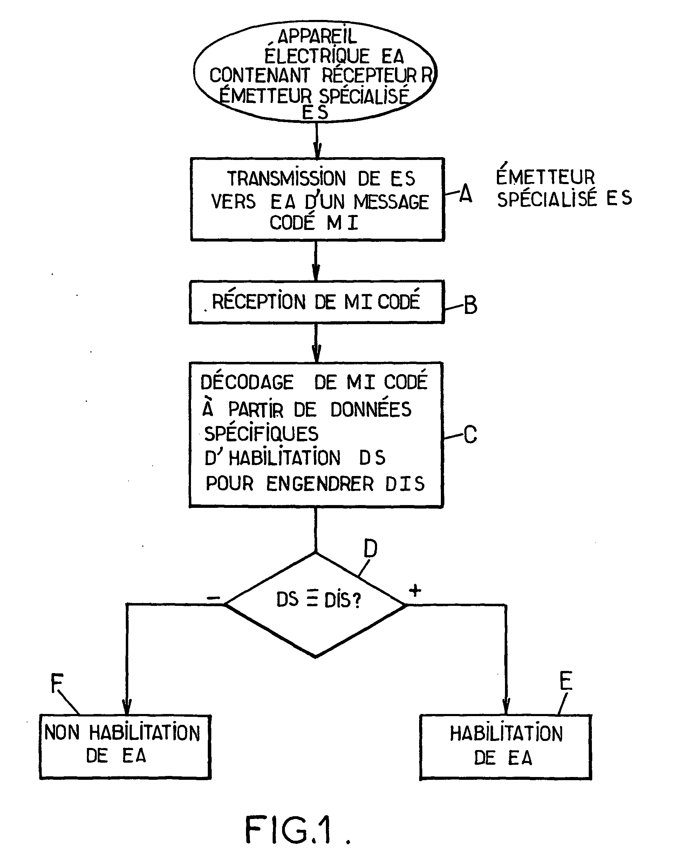

Le procédé ou protocole de contrôle d'habilitation d'un appareil électrique connecté à un réseau conforme à l'objet de la présente invention, sera maintenant décrit en liaison avec la figure 1 et les figures suivantes.

D'une manière générale, on indique que le procédé objet de la présente invention couvre toutes notions d'habilitation d'un appareil électrique connecté à un réseau et bien entendu en mode de fonctionnement, au moins en mode veille, et permettant soit l'exécution d'une fonction de surveillance de la localisation de cet appareil électrique, soit l'exécution d'une fonction de surveillance de l'utilisation de cet appareil électrique eu égard à une ou plusieurs conditions ou obligations contractuelles d'utilisation en vue d'une prestation de service, l'habilitation d'utilisation de cet appareil électrique étant conférée à ce dernier lorsque cette utilisation satisfait aux obligations contractuelles souscrites, et la non habilitation de cet appareil étant conférée à ce dernier dans le cas contraire. Pour la mise en oeuvre du procédé de contrôle d'habilitation d'un appareil électrique, objet de la présente invention, on indique que ce procédé peut être mis en oeuvre à partir d'un émetteur spécialisé spécifique, l'appareil électrique étant toutefois équipé d'un récepteur de messages d'information et, le cas échéant, d'un réémetteur permettant d'assurer la transmission de messages de réponse vers l'émetteur spécialisé précité, l'émetteur spécialisé et l'appareil électrique, et bien entendu le récepteur de messages d'information ainsi que le réémetteur étant connectés à un même réseau.

Par réseau, on entend tout type de réseau communicant et en particulier tout réseau constitué par l'un des réseaux parmi le groupe des réseau informatique local, réseau informatique étendu, réseau hertzien local, réseau de radiotéléphonie cellulaire et bien entendu, de manière non limitative, réseau de distribution d'énergie électrique équipé d'une transmission de messages par courants porteurs basse tension.

On comprend en particulier que le réseau communicant précité permet, grâce à la mise en oeuvre du procédé objet de la présente invention, d'échanger des messages entre toute entité de contrôle habilitée et au moins l'un des appareils électriques équipés d'un récepteur de messages d'information ainsi que bien entendu avec l'émetteur spécialisé de messages d'information permettant la mise en oeuvre du procédé objet de l'invention précitée.

En référence à la figure 1, on indique que l'on dispose ainsi d'un appareil électrique EA contenant un récepteur R, muni le cas échéant d'un réémetteur ou émetteur localisé EL, et d'un émetteur spécialisé ES, lesquels sont connectés par le réseau communicant précité.

Dans ces conditions, le procédé de contrôle d'habilitation objet de la présente invention consiste, en une étape A, à transmettre de l'émetteur spécialisé vers l'appareil électrique EA, un message d'information codé, noté MI, comportant au moins une information d'habilitation codée fonction d'un code de contrôle d'habilitation, puis, en une étape B, à recevoir au niveau du récepteur R, au moyen de ce dernier, le message d'information codé MI précité.

L'étape B est alors suivie d'une étape C, au niveau du récepteur R, consistant à décoder le message d'information codé MI en fonction de données spécifiques d'habilitation intégrées au récepteur R pour engendrer des informations d'habilitation décodées, ces informations d'habilitation décodées étant notées DIS.

L'étape C est elle-même suivie, au niveau du récepteur R, et donc de l'appareil électrique EA, d'une procédure de test D consistant à vérifier que les informations décodées DIS sont identiques aux données spécifiques d'habilitation DS intégrées au récepteur R. Sur réponse positive au test D, l'habilitation de l'appareil électrique EA est établie à l'étape E. Sur réponse négative au test D, la non habilitation de l'appareil électrique EA est commandée à l'étape F.

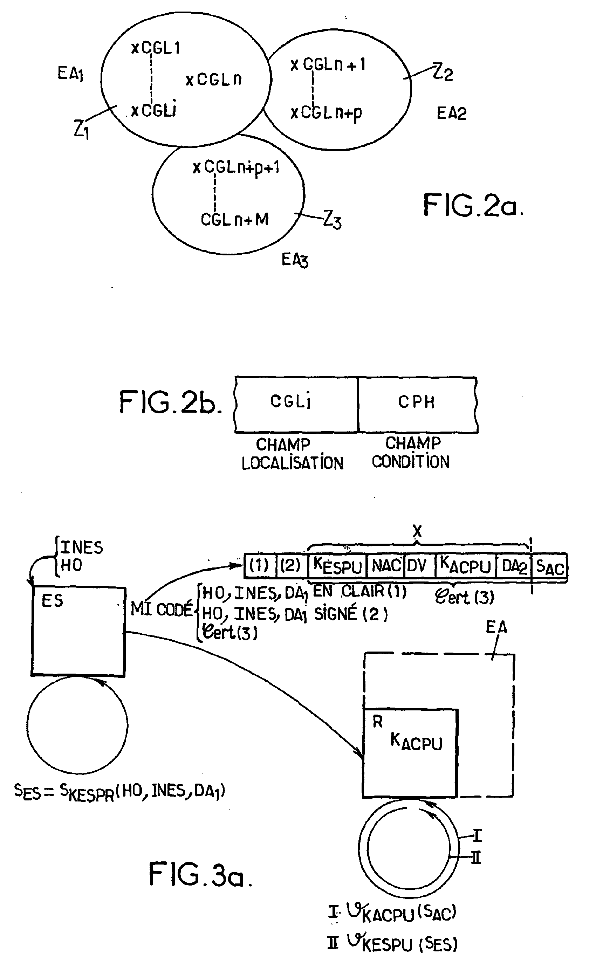

Différentes indications relatives à l'information d'habilitation codée en fonction d'un code de contrôle d'habilitation, ce code de contrôle d'habilitation permettant de définir un périmètre ou zone de contrôle ou de surveillance par exemple, seront maintenant données en liaison avec la figure 2a.

La notion de zone de contrôle, ou le cas échéant d'un périmètre de contrôle d'habilitation, doit être comprise comme zone non délimitée matériellement mais définie au moins par un ensemble de codes de contrôle affecté à un appareil électrique donné, cet appareil électrique étant réputé dans la zone de contrôle d'habilitation qui lui est dévolue si et seulement si cet appareil électrique, lorsque ce dernier est connecté au réseau communicant, est susceptible de recevoir uniquement les codes de contrôle correspondant à l'ensemble de codes de contrôle qui lui ont été affectés.

Ainsi, pour un appareil électrique EA donné, on peut observer sur la figure 2a qu'il existe une zone $Z_1$ pour un appareil électrique $EA_1$, une zone $Z_2$ pour un appareil électrique $EA_2$ auquel les codes de contrôle d'habilitation $CGL_{n+1}$ à $CGL_{n+P}$ ont été affectés, et enfin une zone $Z_3$ pour un appareil électrique $EA_3$ auquel les codes de contrôle d'habilitation $CGL_{n+P+1}$ à $CGL_{n+M}$ ont été affectés.

On comprend en particulier qu'en fonction de la localisation géographique, de la nature du réseau et de chaque émetteur spécialisé susceptible d'émettre les codes de contrôle d'habilitation affectés à chaque appareil électrique $EA_1$ à $EA_3$ précités, l'ensemble des codes de contrôle affectés à chaque appareil correspond ainsi à une localisation géographique ou zone de surveillance.

D'une manière générale, on indique que l'étape A de transmission du message codé MI peut être répétée périodiquement de manière à assurer une surveillance permanente de chaque appareil électrique concerné.

L'interruption de l'émission périodique des messages codés MI peut alors avantageusement être suivie d'une opération de condamnation de l'appareil électrique considéré, ainsi qu'il sera décrit de manière plus détaillée ultérieurement dans la description, afin d'éviter toute tentative de vol par exemple.

Ainsi, en référence à la figure 2b, on indique que le code de contrôle d'habilitation $CGL_i$ peut comprendre au moins un champ contenant une valeur numérique représentative d'une localisation géographique, dans les conditions précédemment mentionnées en relation avec la figure 2a, localisation à laquelle l'appareil électrique EA correspondant appartient.

En outre, en référence à la même figure 2b, on indique que le code de contrôle d'habilitation peut comprendre au moins un champ, noté CPH, contenant une valeur numérique représentative d'une condition souscrite par l'utilisateur, ainsi qu'il sera décrit ultérieurement dans la description.

Une description plus détaillée du procédé de contrôle d'habilitation d'un appareil électrique connecté à un réseau, conforme à l'objet de la présente invention, sera maintenant donnée en liaison avec la figure 3a dans un mode de mise en oeuvre spécifique permettant de conférer un haut degré de sécurité à l'ensemble des appareils électriques soumis à ce procédé.

Dans ce but, on indique que chaque message codé MI est signé électroniquement, chaque message signé comportant un champ de données d'authentification signé permettant, sur vérification de signature par le récepteur R de l'appareil électrique EA, de décider si ces informations vérifiées et décodées vérifient les données spécifiques d'habilitation intégrées dans le récepteur R.

En référence à la figure 3a précitée, on indique que l'émetteur spécialisé ES possède un secret qui permet d'authentifier les messages codés MI qu'il émet et évite ainsi la construction et le fonctionnement d'un émetteur spécialisé pirate, par émulation sur un ordinateur portable par exemple.

Le mode opératoire qui sera décrit ci-après en relation avec la figure 3a se rapporte avantageusement à un émetteur spécialisé ES assurant une diffusion périodique des messages codés MI constituant des messages d'authentification sur lesquels les récepteurs R peuvent réagir selon la nature des services qui doivent être exécutés.

Le mode opératoire dans le cas de la figure 3a correspond à un mode de fonctionnement monodirectionnel par exemple.

D'une manière générale, l'ensemble est soumis au contrôle d'une autorité de certification AC disposant d'une clé privée $K_{ACPR}$ et d'une clé publique $K_{ACPU}$. Chaque émetteur spécialisé ES dispose des informations ci-après :

- informations propres à l'émetteur spécialisé ES par construction ;
- numéro d'identification unique délivré par le constructeur de l'émetteur spécialisé ES, ce numéro étant représenté sur la figure 3a par la référence INES;
- valeur d'horodatage, notée HO, correspondant à la date et l'heure délivrées par un circuit d'horloge de l'émetteur spécialisé ES. Les valeurs d'horodatage HO peuvent être codées sous le format YY,MM,JJ,HH,mn,SS,CC où YY désigne le quantième de l'année, MM désigne le mois, JJ désigne le jour, HH désigne l'heure, mn désigne les minutes, SS désigne les secondes et CC les centièmes de seconde.

En outre, chaque émetteur spécialisé ES dispose d'un module de calcul de signature permettant de calculer la valeur signée de données du message codé MI à partir d'un système de signature à clé privée $K_{ESPR}$, clé publique $K_{ESPU}$ propre à chaque émetteur spécialisé ES. Ainsi, une opération de calcul de signature INES, HO et le cas échéant de données auxiliaires $DA_1$ peut être réalisée avantageusement au niveau de chaque émetteur spécialisé ES, cette opération de calcul de valeur signée étant notée :

$$S_{ES} = S_{KESPR}(\text{HO, INES, DA1})$$

et représentée pour cette raison par une flèche en boucle fermée, l'opération de calcul de valeur signée étant effectuée au niveau du seul émetteur spécialisé ES. Les données auxiliaires $DA_1$ peuvent être constituées par des données spécifiques, lesquelles seront explicitées ultérieurement dans la description.

En ce qui concerne les paramètres de calcul de la signature, cette valeur de signature peut être calculée à partir de la clé privée $K_{ESPR}$, la clé publique $K_{ESPU}$ pouvant servir à vérifier la valeur signée, ainsi qu'il sera décrit ultérieurement dans la description. Les champs soumis à signature comportent ainsi le numéro d'identification INES de l'émetteur spécialisé, la valeur d'horodatage HO et le cas échéant les données auxiliaires $DA_1$.

On comprend ainsi que la valeur signée (2) obtenue constitue une signature électronique des informations en clair (1) précitées. En outre, chaque émetteur spécialisé ES dispose d'une pluralité de données d'habilitation telles que la clé publique de l'émetteur spécialisé, $K_{ESPU}$, le nom de l'autorité de certification NAC, la date de validité DV de la clé publique, la clé publique $K_{ACPU}$ de l'autorité de certification et des données auxiliaires $DA_2$, constituant le champ de données X.

Enfin, ces données d'habilitation comportent une signature $S_{AC}$ des données précitées. La signature $S_{AC}$ est calculée par l'autorité de certification AC et implantée en mémoire de chaque émetteur spécialisé ES avec le champ de données X. La signature $S_{AC}$ vérifie la relation :

$$S_{AC} = S_{KACPR}(X)$$

où $S_{KACPR}$ désigne l'opération de signature à partir de la clé privée $K_{ACPR}$ de l'autorité de certification.

D'autres paramètres peuvent être intégrés au calcul de la valeur de signature $S_{AC}$ tels que par exemple un paramètre d'indication de la version de l'émetteur spécialisé ES et de la longueur des messages émis par exemple, au titre des données auxiliaires $DA_2$.

Le calcul de la valeur signée $S_{ES}$ représentée à la figure 3a au niveau de l'émetteur spécialisé ES est alors effectué avantageusement avant chaque émission de message périodique codé MI.

Ainsi, en référence à la figure précitée, ce message est transmis et comprend au moins l'information d'horodatage HO et l'information du numéro d'identification INES de l'émetteur spécialisé ES transmises en clair, ainsi que l'information d'horodatage HO et l'information du numéro d'identification INES soumise à l'opération de signature, ainsi que l'ensemble des données X et $S_{AC}$ constituant un certificat Cert contenant les informations en clair suivantes :

- la clé publique $K_{ESPU}$ de l'émetteur spécialisé ES,
- le nom NAC de l'autorité de certification,
- la date DV donnée sous la forme précédemment indiquée dans la description,

- ainsi que la clé publique $K_{ACPU}$ de l'autorité de certification,
- des données auxiliaires $DA_2$, le cas échéant.

En outre, un champ relatif à une information de la version de l'émetteur spécialisé ES et de la longueur des messages émis peut être prévu, ces données constituant par exemple les données auxiliaires précitées. Dans ce dernier cas, des octets libres sont en outre ajoutés pour que le message soit à la longueur annoncée dans le champ infos version.

Sur réception du message codé MI, le récepteur R peut procéder, ainsi que représenté sur la figure 3a, à une première opération de vérification de signature, notée $\vartheta_{KACPU}$, au moyen de la clé publique $K_{ACPU}$ de l'autorité de certification précitée. Dans une variante de réalisation, on indique que le récepteur peut transmettre le message MI codé à un serveur distant adapté pour effectuer l'opération de vérification de signature précitée. Sur la figure 3a, l'opération de vérification de signature lorsqu'elle est effectuée au niveau du récepteur R est notée :

$$\vartheta_{KACPU}(S_{AC})$$

et représentée par une première flèche (I) en boucle fermée, cette opération étant réalisée au niveau du récepteur R. En mode normal, la valeur de la clé publique $K_{ACPU}$ utilisée dans l'opération I a été configurée préalablement dans le récepteur R, selon un mode préférentiel ; cependant, en mode simplifié, on pourra utiliser la valeur de la clé publique $K_{ACPU}$ contenue dans le message MI. Grâce à l'opération I de vérification de signature précitée, le récepteur R peut alors procéder, d'une part, à une vérification de l'authenticité des données du champ de données X, incluant notamment la clé publique $K_{ESPU}$ de l'émetteur spécialisé ES auteur du message MI codé, pour la valeur vraie de la vérification de signature précitée, le cas échéant à une vérification de la valeur de la clé publique $K_{ACPU}$, lorsque le récepteur R dispose, au préalable, de cette valeur, puis, d'autre part, à partir de la valeur de la clé publique $K_{ESPU}$ de l'émetteur spécialisé ES, dont la valeur et l'authenticité a été vérifiée, à une deuxième opération II de vérification de signature des valeurs signées HO, INES, $DA_1$, cette opération étant notée :

$$\vartheta_{KESPU}(S_{KESPR(HO,INES,DA1)}) = \vartheta_{KESPU}(S_{ES}).$$

Cette deuxième opération II de vérification est représentée par une deuxième boucle fermée II au niveau du récepteur R.

Ce processus permet d'établir que les informations d'horodatage plus de numéro d'identification de l'émetteur spécialisé INES sont valides et ont bien été soumises à signature au moyen de la clé privée $K_{ESPR}$ associée à la clé publique $K_{ESPU}$ de l'émetteur spécialisé incluse dans le certificat Cert.

Le mode opératoire du procédé objet de la présente invention précédemment décrit ne dépend aucunement de la façon dont ont été constituées les paires clé publique, clé privée de l'autorité de certification AC ou de chaque émetteur spécialisé ES. A titre d'exemple non limitatif, l'algorithme de signature peut être l'algorithme RSA connu en tant que tel et appliqué soit directement aux données à signer, soit à un condensat de ces données calculé par application d'une fonction de hachage à ces données. A titre d'exemple non limitatif, l'algorithme utilisé dans la fonction de hachage peut être l'algorithme MD5, connu en tant que tel. La paire de clés $K_{FSPR}$, $K_{ESPU}$ peut être commune à plusieurs émetteurs récepteurs ES. Toutefois, lorsque la clé privée $K_{ESPR}$ est compromise, le niveau de sécurité de tous les émetteurs récepteurs concernés est alors mis en cause. Il est donc préférable que chacun des émetteurs récepteurs ES dispose d'une paire de clés afin de limiter les risques de compromission.

En ce qui concerne la mise en oeuvre de l'émetteur spécialisé ES, on indique que la partie certificat Cert délivrée par ce dernier définit ainsi la qualité de l'authentification apportée par l'émetteur spécialisé considéré.

Ce certificat peut être inclus à la construction, l'autorité de certification AC étant soit indépendante, soit le constructeur lui-même.

Le certificat Cert peut en outre être inclus dans chaque émetteur spécialisé ES par l'opérateur d'installation de cet émetteur spécialisé.

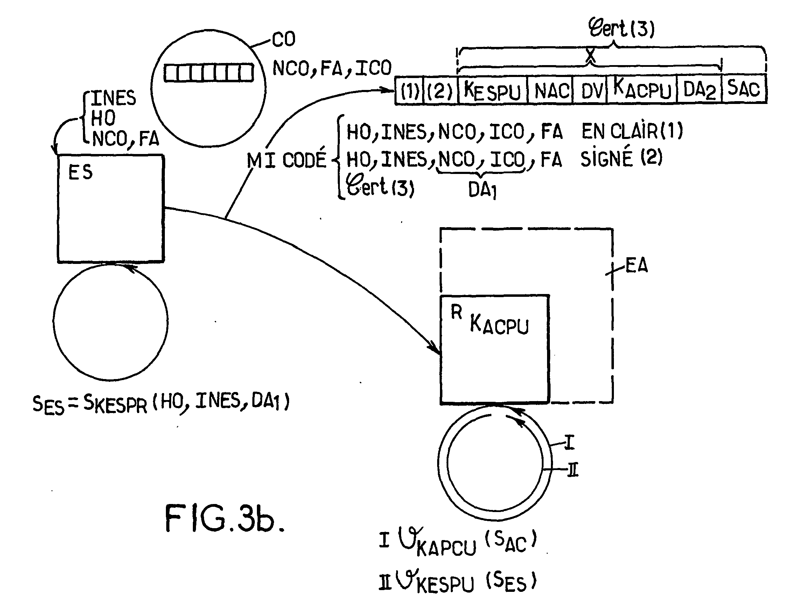

Une description plus détaillée d'un mode de mise en oeuvre spécifique du procédé objet de la présente invention tel qu'illustré en figure 3a sera maintenant donnée en liaison avec la figure 3b dans un cas plus particulier dans lequel l'émetteur spécialisé ES est associé à un dispositif de comptage, tel qu'un compteur d'électricité par exemple.

Dans ces conditions, et conformément à un aspect particulièrement remarquable du procédé objet de la présente invention, le compteur CO délivre à l'émetteur spécialisé ES un numéro d'identification unique, noté NCO, délivré par le constructeur du compteur, ainsi qu'un index ICO représentatif de la consommation enregistrée par le compteur.

Dans ces conditions, le message codé MI est constitué à partir des mêmes éléments que ceux décrits en liaison avec la figure 3a mais auxquels sont ajoutés, d'une part, le numéro de compteur et, d'autre part, l'index de compteur, c'est-à-dire l'information représentative de la consommation réalisée par l'abonné, le cas échéant par l'appareil électrique EA. Les informations de numéro de compteur NCO et d'index ICO sont introduites tant au niveau de la partie en clair du message que de la partie signée de celui-ci, au titre des données auxiliaires $DA_1$ par exemple.

Après réception du message codé MI par le récepteur R, les opérations de vérification de signature I et II sont réalisées de la même manière que dans le cas de la figure 3a.

Toutefois, et selon un aspect particulièrement avantageux de ce mode de réalisation, le récepteur R, après les opérations de vérification de signature précitées, permet d'assurer que les informations de numéro de compteur et d'index sont valides et ont bien été chiffrées par la clé privée $K_{ESPR}$ correspondant à la clé publique $K_{ESPU}$ de l'émetteur spécialisé ES incluse dans le certificat Cert.

L'authentification de localisation est alors complète lorsque la relation est faite entre le numéro du compteur NCO et la localisation de ce compteur sur le réseau de distribution où le cas échéant l'identité du client abonné.

On indique en particulier que la présence des valeurs d'horodatage HO, le cas échéant d'index de comptage ICO, valeurs fonctions monotones croissantes du temps, dans le message MI et dans la signature $S_{ES}$ permet d'éviter le rejeu frauduleux d'un message MI en vue de simuler la présence d'un émetteur spécialisé ES.

Enfin, et dans une variante d'exécution de mise en oeuvre de la figure 3b, on indique que chaque message d'information codé MI peut comporter également au moins un champ de données représentatif d'une durée d'habilitation d'utilisation de l'appareil électrique. Sur la figure 3b précitée, cette durée d'habilitation est désignée par FA. Elle peut de préférence correspondre à une date de début et une date de fin d'abonnement mémorisées dans les circuits électriques du compteur CO pour l'appareil électrique EA ou, le cas échéant, pour un groupe d'appareils électriques géré par le compteur CO. Dans un tel cas, la durée d'habilitation de l'appareil électrique, c'est-à-dire le champ FA, est avantageusement intégrée dans le message d'information codé MI, tant dans la partie en clair que dans la partie signée de celui-ci. La durée d'habilitation peut également être limitée à l'intervalle de temps séparant l'émission d'un nouveau message d'authentification, d'un message d'authentification antérieur.

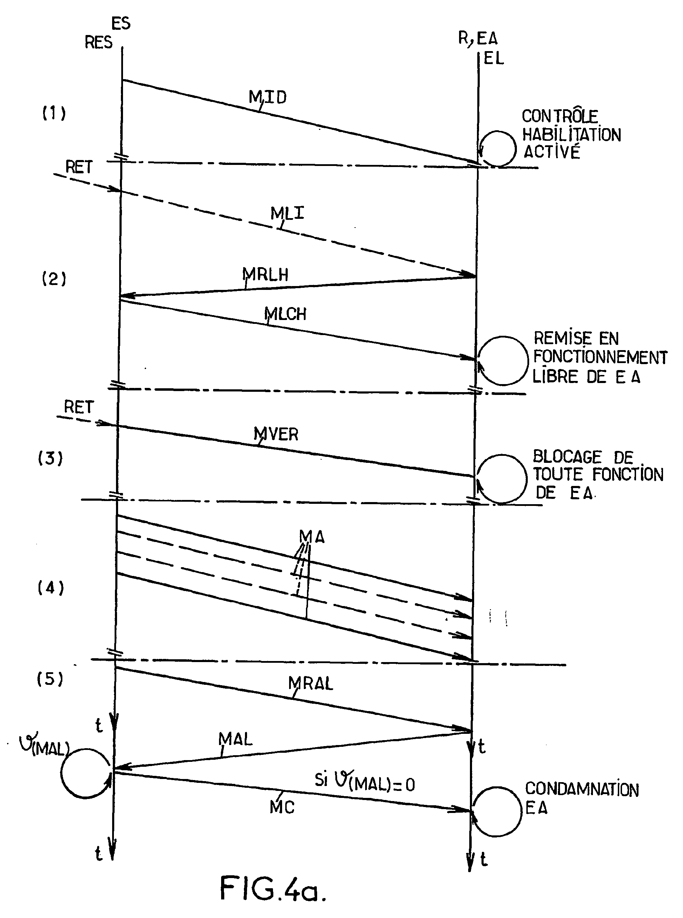

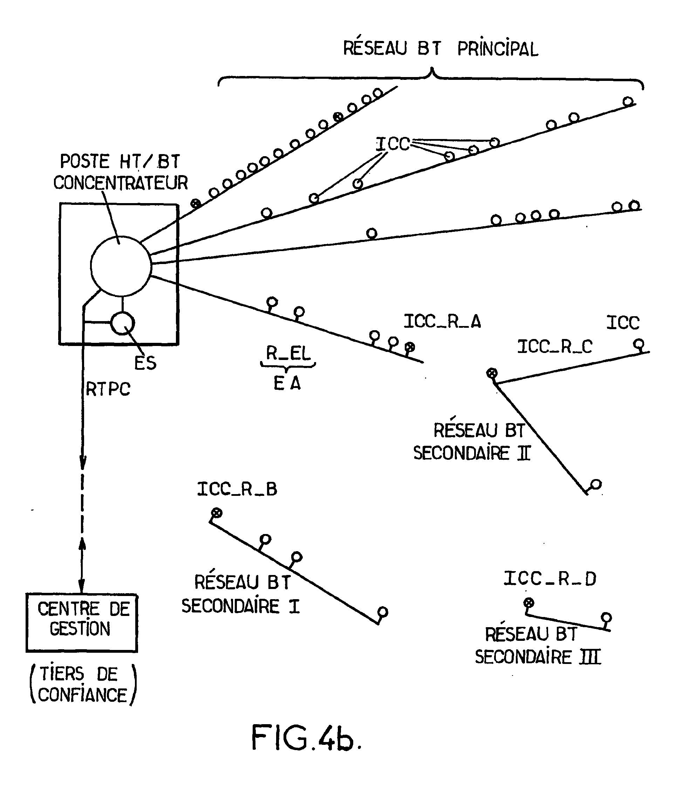

Une description plus détaillée de différentes variantes de mise en oeuvre du procédé objet de la présente invention sera maintenant donnée en liaison avec les figures 4a et 4b.

D'une manière générale, on rappelle que le procédé objet de la présente invention peut être mis en oeuvre soit de manière monodirectionnelle par la transmission de messages d'information codés MID de l'émetteur spécialisé ES vers le récepteur R de l'appareil électrique considéré EA, soit au contraire de manière bidirectionnelle, un échange entre un émetteur spécialisé considéré ES, muni d'un récepteur RES, et l'appareil électrique EA alors muni d'un émetteur localisé, noté EL, étant alors institué.

Sur la figure 4a, on a représenté de manière illustrative l'échange de messages d'information entre l'émetteur spécialisé ES et l'appareil électrique EA, les messages d'information de nature différentes étant a priori transmis de manière asynchrone selon un échange monodirectionnel ou, le cas échéant, lors d'un protocole d'échange bidirectionnel de messages d'information entre l'émetteur spécialisé ES et l'appareil électrique EA, c'est-à-dire, d'une part, le récepteur R et, d'autre part, l'émetteur localisé EL correspondant, sur incitation par l'émetteur spécialisé ES dans les conditions qui seront explicitées ci-après.

On comprend en particulier que l'échange bidirectionnel précité, lorsque celui-ci est réalisé sur incitation par l'émetteur spécialisé ES, permet en fait de contrôler le protocole d'échange de messages d'information entre l'émetteur spécialisé précité et chaque appareil électrique EA à partir du seul émetteur spécialisé précité.

De manière plus particulière, on indique que l'échange de messages de fonctions diversifiées peut présenter soit un caractère monodirectionnel, soit au contraire un caractère bidirectionnel lorsque la fonction réalisée au niveau de l'appareil électrique EA le nécessite, ainsi qu'illustré en figure 4a. Pour cette raison, et sur la figure précitée, on indique que les différents messages, présentant et permettant de réaliser des fonctionnalités diverses et en particulier l'échange de ces messages entre l'émetteur récepteur ES et l'appareil électrique EA pour réaliser chaque fonction diversifiée, sont séparés par des lignes en trait mixte.

En référence à la figure précitée, on indique que le procédé de contrôle d'un appareil électrique EA conforme à l'objet de la présente invention peut consister à transmettre, de l'émetteur spécialisé ES au récepteur R de cet appareil électrique, un message d'initialisation, noté MID, comportant au moins les données spécifiques d'habilitation intégrées précédemment mentionnées dans la description. On indique que cette transmission peut être de type monodirectionnel, afin de ne pas surcharger le réseau en messages d'accusé de réception. La transmission du message d'initialisation MID est représentée au point (1) de la figure 4a. De manière connue en tant que telle, suite à la réception des données spécifiques d'habilitation intégrées par le récepteur R de l'appareil électrique EA et à vérification de ces données par ce dernier, une réponse positive à cette vérification, le récepteur R ayant été installé auparavant en mode veille, permet d'activer toutes les fonctions du récepteur R, et le cas échéant de l'émetteur localisé EL équipant l'appareil électrique EA, pour assurer différentes fonctions qui seront explicitées en relation avec les points (2) à (5) de la même figure 4a.

En outre, ainsi que représenté au point (2) de la figure précitée, le procédé objet de la présente invention peut comporter une étape consistant à transmettre sur requête du récepteur R, de l'émetteur spécialisé ES à ce récepteur R, un message MLCH de levée de contrôle d'habilitation de l'appareil électrique EA, le récepteur R et l'appareil électrique EA, sur réception du message de levée de contrôle d'habilitation, étant alors remis en fonctionnement libre.

Dans le mode de réalisation représenté en figure 4a, au point (2) de celle-ci, l'émetteur localisé EL de l'appareil électrique EA délivre, au récepteur RES de l'émetteur spécialisé, un message de requête de levée d'habilitation, MRLH, suite à incitation par l'émetteur spécialisé ES, lequel a préalablement adressé au récepteur R de l'appareil électrique EA un message d'information de levée, noté MLI. Ce message d'information de levée a lui-même été transmis par l'émetteur spécialisé ES par l'intermédiaire d'une requête émise par un tiers, requête notée RET. Ce tiers est bien entendu un tiers de confiance ou un organisme de gestion habilité, ainsi qu'il sera décrit ultérieurement dans la description. On comprend en particulier que le message de requête RET peut être véhiculé par un réseau distinct du réseau communicant, auquel l'émetteur spécialisé ES et l'appareil électrique EA ainsi que le récepteur R et l'émetteur localisé EL équipant ce dernier sont connectés. On indique cependant que la requête RET peut être sécurisée par un processus d'authentification du tiers de confiance, par un processus d'authentification classique, lequel, pour cette raison, ne sera pas décrit dans la description. Un processus simplifié peut consister à soumettre la requête RET à un code d'accès à l'émetteur spécialisé ES considéré. Ce processus de sécurisation permet d'éviter toute usurpation de l'identité du tiers de confiance.

Suite à la réception du message de levée de contrôle d'habilitation MLCH par le récepteur R de l'appareil électrique EA, une procédure de remise en fonctionnement libre de l'appareil électrique EA est lancée en interne, ainsi que représenté sur la figure 4a au point (2) de celle-ci.

En outre, le procédé objet de la présente invention peut consister, ainsi qu'illustré au point (3) de la figure 4a, à transmettre au récepteur R de l'appareil électrique EA, à partir de l'émetteur spécialisé ES et sur requête d'un élément tiers, tiers de confiance défini pour le périmètre de contrôle et assurant une surveillance de ce périmètre de contrôle, un message de verrouillage sur site, noté MVER, de l'appareil électrique EA. La réception du message de verrouillage MVER sur le site de l'appareil électrique EA permet alors en interne de procéder au blocage de toute fonction vitale de l'appareil électrique précité. On comprend en particulier que le processus de verrouillage sur site peut avantageusement être mis en oeuvre par le propriétaire du ou des appareils électriques EA, lequel, lors d'une absence de son domicile pendant une durée prolongée, peut alors déclarer son absence au tiers de confiance, ce dernier assurant, par l'intermédiaire de sa requête RET puis par l'émission du message de verrouillage MVER par l'intermédiaire de l'émetteur spécialisé ES, le blocage de toute fonction vitale de l'appareil électrique ou des appareils électriques EA concernés pendant la durée de cette absence.

En outre, ainsi que représenté au point (4) de la figure 4a, le procédé objet de la présente invention peut consister à transmettre périodiquement, de l'émetteur spécialisé ES au récepteur R de l'appareil électrique EA, un message d'authentification MA de l'émetteur spécialisé considéré.

En référence au point (1) de la figure précitée, on indique que les messages d'authentification MA peuvent comporter, de la même manière que les messages d'initialisation MID, au moins les données spécifiques d'habilitation intégrées en ces mêmes données d'habilitation, la procédure d'activation du contrôle d'habilitation au niveau du récepteur R de l'appareil électrique EA n'étant toutefois pas lancée au niveau de cet appareil électrique et de ce récepteur lors de la réception d'un message d'authentification. En effet, les messages d'authentification MA tels que décrits au point (4) de la figure précitée peuvent être transmis avec une périodicité déterminée ou sur simple requête du tiers de confiance assurant la gestion du procédé objet de l'invention. En particulier, les messages d'authentification MA peuvent être modifiés de manière périodique ou aléatoire, les données spécifiques d'habilitation intégrées étant de ce fait modifiées en conséquence, afin d'assurer une immunité à la fraude par exemple.

Enfin, le procédé objet de la présente invention peut consister, ainsi que représenté à l'étape (5) de la figure 4a, à transmettre de l'appareil électrique EA, c'est-à-dire de l'émetteur localisé EL équipant ce dernier, au récepteur RES de l'émetteur spécialisé ES, un message d'allégeance MAL comportant un code d'identification de l'appareil électrique EA.

De préférence, ainsi que représenté sur la figure 4a précitée, le message d'allégeance MAL est émis par l'appareil électrique EA sur réception d'un message de requête d'allégeance MRAL transmis de l'émetteur spécialisé ES vers l'appareil électrique EA, le message d'allégeance MAL étant ainsi émis en réponse à la réception du message de requête d'allégeance MRAL.

Suite à la réception du message d'allégeance MAL par le récepteur RES de l'émetteur spécialisé ES, ce dernier procède à une vérification du message d'allégeance précité. La procédure de vérification, conduite en interne au niveau de l'émetteur spécialisé ES, consiste essentiellement à vérifier la valeur du code d'identification de l'appareil électrique EA transmis au sein du message d'allégeance MAL.

Sur réponse positive à la procédure de vérification, notée $\vartheta(MAL)$, le procédé objet de l'invention peut alors consister à transmettre, de l'émetteur spécialisé au récepteur R de l'appareil électrique EA, en l'absence de vérification, cette absence de vérification étant notée $\vartheta(MAL)=0$, un message de commande de condamnation du récepteur et de l'appareil électrique EA, l'opération de condamnation étant bien entendu effectuée en interne au niveau de l'appareil électrique précité.

On comprend en particulier que la procédure de transmission d'un message d'allégeance et de réponse en l'absence de vérification de ce message d'allégeance est particulièrement avantageuse dans la mesure où la notion d'allégeance recouvre non seulement le bon fonctionnement de l'appareil électrique EA vis-à-vis de l'émetteur spécialisé ES mais également le contrôle de tout appareil électrique EA dérobé à son possesseur ou propriétaire légitime, et donc habilité à fonctionner dans une zone de contrôle $Z_1$, et transporté dans une zone de contrôle $Z_2$ pour laquelle les paramètres de contrôle d'habilitation sont différents, ainsi que mentionné précédemment dans la description. Dans cette dernière hypothèse, on indique que la condamnation totale de l'appareil électrique EA, cette condamnation totale pouvant consister en un blocage irréversible de toute fonction vitale de l'appareil électrique EA, se révèle particulièrement dissuasive vis-à-vis des tentatives de vol en raison de l'impossibilité d'utilisation de tout appareil électrique EA ainsi dérobé mais soumis au protocole de contrôle d'habilitation, objet de la présente invention.

Ainsi, la procédure de transmission d'un message d'allégeance suite à réception d'un message de requête d'allégeance MRAL telle que représentée au point (5) de la figure 4a, peut avantageusement être systématiquement mise en route après chaque envoi par l'émetteur spécialisé ES du message d'initialisation MID, tel que représenté au point (1) de la figure précitée, la procédure de transmission d'un message d'allégeance dans cette situation permettant d'assurer une vérification du bon fonctionnement de l'appareil électrique EA soumis au contrôle d'habilitation après activation de ce dernier.

En outre, et conformément à un aspect remarquable du procédé objet de la présente invention, on indique que la même procédure de transmission d'un message d'allégeance MAL peut avantageusement être mise en oeuvre après chaque transmission d'un message d'authentification MA tel qu'illustré au point (4) de la figure 4a. dans une telle situation, le succès de la transmission du message d'allégeance et de la vérification de ce dernier permet de vérifier l'adéquation de l'appareil électrique EA aux nouvelles données d'authentification délivrées préalablement par le message d'authentification MA à l'appareil électrique concerné.

Alors que les procédures de transmission de messages de requête de levée de contrôle d'habilitation et de transmission d'un message de verrouillage telles que décrites et illustrées au point (2) respectivement (3) de la figure précitée, sont de préférence mises en oeuvre sur réception d'un message de requête de tiers RET, tiers de confiance, la procédure de transmission d'un message d'allégeance MAL peut de préférence être mise en oeuvre à la seule initiative de l'émetteur spécialisé ES, ce dernier disposant de l'initiative du contrôle de l'allégeance de chaque appareil électrique EA dont il assure le contrôle d'habilitation. Dans ces conditions, outre l'émission d'un message de requête d'allégeance MRAL par l'émetteur spécialisé ES suite à la transmission d'un message d'initialisation MID ou d'un message d'authentification MA, il est avantageux de programmer l'émetteur spécialisé ES de façon à transmettre un message de requête d'allégeance et ainsi de lancer la procédure de transmission de messages d'allégeance par chaque appareil électrique considéré EA de manière périodique, afin d'assurer un contrôle exhaustif.

Une description plus détaillée d'un mode spécifique de mise en oeuvre non limitatif du procédé objet de la présente invention lorsque le réseau, auquel sont connectés, d'une part, l'émetteur spécialisé ES, et d'autre part, un appareil électrique EA équipé d'un récepteur R et d'un émetteur localisé EL, est constitué par le réseau de distribution d'énergie électrique basse tension, réseau BT, sera maintenant donnée en liaison avec la figure 4b.

Sur la figure précitée, on a représenté un poste de transformation haute tension/ basse tension, poste HT/BT, muni d'un concentrateur permettant la transmission de messages par courants porteurs. Le réseau de distribution d'énergie électrique basse tension peut être subdivisé en réseau BT principal et réseaux BT secondaires, plusieurs réseaux BT secondaires pouvant être prévus, ces réseaux secondaires n'étant pas interconnectés au poste HT/BT du réseau BT principal. Le poste HT/BT peut lui-même être interconnecté par le réseau téléphonique public commuté RTPC à un centre de gestion tenu par un tiers de confiance. Sur le réseau BT principal et sur chaque réseau BT secondaire, noté secondaire I, secondaire II, secondaire III, chaque abonné connecté au réseau BT correspondant dispose d'un compteur d'énergie électrique et bien entendu d'un circuit d'interface clientèle communicante, noté circuit ICC, connecté entre l'un des conducteurs de phase et le neutre du réseau afin de permettre la transmission et la réception de messages par courants porteurs. Ainsi, sur la figure 4b, chaque ensemble constitué par un compteur et un circuit ICC est représenté par un cercle vide placé sur le réseau BT considéré. En outre, ainsi que représenté sur la figure 4b, chaque branche du réseau BT, réseau principal ou réseau secondaire, peut être munie d'au moins un dispositif d'interfaçage d'une liaison bidirectionnelle courants porteurs basse tension / radiofréquence, chaque dispositif assurant ainsi la transmission bidirectionnelle de messages par courants porteurs par l'intermédiaire de l'espace hertzien. Dans ces conditions, la mise en oeuvre de dispositifs d'interfaçage de liaison bidirectionnelle courants porteurs basse tension / radiofréquence permet d'assurer la transmission bidirectionnelle des messages précités dans des conditions particulièrement avantageuses, quel que soit le nombre de circuits ICC connectés à chaque branche du réseau. Dans ces conditions, les messages de communication entre le concentrateur du poste HT/BT et chaque circuit ICC, et finalement chaque abonné, sont transmis avec une transparence quasi totale vis-à-vis de l'information véhiculée par les courants porteurs. En conséquence, ces messages sont transmis par une retransmission en temps réel de toute trame d'information véhiculée par les courants porteurs circulant sur le réseau BT. La transmission des messages ou des trames d'informations ou de données précitée s'effectue alors selon un processus de répétition par vagues avec attribution de crédit d'émission. Le caractère bidirectionnel de la transmission est alors assuré. Pour une description plus détaillée du mode opératoire de la transmission bidirectionnelle de messages entre un concentrateur de poste HT/BT et un dispositif d'interfaçage d'une liaison bidirectionnelle courants porteurs basse tension / radiofréquence, on pourra utilement se reporter à la demande de brevet PCT WO 98/17013 intitulée *"Dispositif d'interfaçage d'une liaison bidirectionnelle courants porteurs basse tension / radiofréquence"* et publiée au nom d'ELECTRICITE DE FRANCE le 23 avril 1998.

Dans ces conditions, l'échange bidirectionnel de messages entre l'émetteur spécialisé ES et tout appareil électrique EA muni d'un récepteur R et d'un émetteur localisé EL peut être effectué de manière satisfaisante par l'intermédiaire des dispositifs d'interfaçage précités, notés ICC-R, et représentés au dessin de la figure 4b par l'intermédiaire d'un cercle comportant une croix accolé aux branches du réseau BT.

On comprend en particulier que l'ensemble du système décrit en figure 4b permet l'acheminement des messages précédemment décrits en liaison avec la figure 4a. Bien entendu, lorsque l'émetteur spécialisé ES est placé au niveau du concentrateur du poste HT/BT, la gestion d'un ensemble d'installations électriques domestiques comportant une pluralité d'appareils électriques EA au niveau de chaque abonné peut être assurée par un seul et même émetteur spécialisé ES. Dans ces conditions, l'émetteur spécialisé ES est directement relié, d'une part, au réseau téléphonique public commuté RTPC et, d'autre part, au réseau BT par l'intermédiaire d'un dispositif d'interfaçage d'une liaison bidirectionnelle courants porteurs basse tension / radiofréquence tel que décrit précédemment dans la description.

Une description plus détaillée d'applications spécifiques du procédé objet de la présente invention à différentes prestations de service sera maintenant donnée en liaison avec les figures 5a et 5b.

La figure 5a est relative à un premier exemple de réalisation de mise en oeuvre d'un émetteur spécialisé ES et du procédé objets de la présente invention lorsque l'appareil électrique EA muni d'un récepteur équipe un appareil électrique d'un débiteur de prestation. Dans l'exemple donné en relation avec la figure précitée, l'appareil électrique EA est constitué par un micro-ordinateur et l'utilisateur débiteur de prestation est amené à effectuer des prestations de télétravail à domicile par exemple, pour un créancier situé à un site distant et pouvant constituer une autorité de contrôle. Le micro-ordinateur constitutif de l'appareil électrique EA soumis au protocole objet de la présente invention peut alors être relié au site distant de l'autorité de contrôle par l'intermédiaire d'un réseau ATM ou du réseau INTERNET par exemple.

En particulier, l'émetteur spécialisé ES, dans cette application, peut émettre périodiquement un message d'authentification MA vers le récepteur R, ce message d'authentification pouvant permettre au prestataire de service débiteur de prestation de prouver au site distant, c'est-à-dire au créancier de la prestation, que l'accès a effectivement lieu depuis le lieu de travail normal et agréé par l'autorité de contrôle.

Le mode opératoire de l'ensemble est décrit ci-après.

Comme tout équipement, c'est-à-dire tout appareil électrique EA connecté au réseau de distribution d'énergie électrique, le micro-ordinateur constituant le poste de travail du débiteur de prestation reçoit les messages périodiques délivrés par l'émetteur spécialisé ES.

Dès la connexion du micro-ordinateur constituant la station de travail au site distant, et après un processus d'identification, le micro-ordinateur est en mesure de transmettre vers le site distant tout ou partie du contenu d'un message reçu de l'émetteur spécialisé ES.

Un tel processus permet la mise en oeuvre des opérations ci-après :

■ vérification de l'authentification de l'émetteur spécialisé ES par le site distant :

Le site distant doit normalement posséder la clé publique $K_{ACPU}$ de l'autorité de certification utilisée par l'émetteur spécialisé ES. En conséquence, par un procédé analogue à celui réalisé par le récepteur R d'un appareil électrique EA, sur réception d'un message

MI ainsi que décrit précédemment, le site distant est en mesure d'authentifier le message transmis par le micro-ordinateur du débiteur de prestation comme provenant de l'émetteur spécialisé ES, le cas échéant du compteur identifié dans le message lorsque l'émetteur spécialisé ES est associé à un compteur. Le site distant peut en outre vérifier l'association de l'identité de l'utilisateur, c'est-à-dire du débiteur de prestation, et de l'émetteur spécialisé ES ou du compteur d'énergie électrique associé à ce dernier.

Dans le cas où le site distant ne possède pas la clé publique $K_{ACPU}$ de l'autorité de certification, et dans le cas où le site distant accepte le risque, il peut alors utiliser celle contenue dans le message ou la partie de message délivrés par l'émetteur spécialisé ES et retransmis par le micro-ordinateur du débiteur de prestation. Cette clé publique $K_{ACPU}$ de l'autorité de certification peut alors être stockée puis soumise à vérification et/ou réutilisation ultérieure au niveau du site distant. Le risque dans l'acceptation de la clé publique $K_{ACPU}$ contenue dans le message délivré par l'émetteur spécialisé ES réside dans le fait d'accepter comme valide un message fabriqué par une fausse autorité de certification. Ce risque doit être assumé par la politique de sécurité du site distant accédé, lequel doit statuer sur le sort à réserver à ce mode opératoire, c'est-à-dire choisir soit le rejet, soit l'acceptation avec alarme ou encore l'acceptation avec demande de confirmation par exemple.

■ Transmission du message venant de l'émetteur spécialisé ES :

La procédure d'authentification de l'identité du débiteur de prestation auprès du site distant peut prévoir explicitement l'envoi du message en provenance de l'émetteur spécialisé ES en lieu et place ou complément de l'authentification classique.

Ce mode opératoire conduit en principe à modifier les protocoles d'authentification existants dans l'état de la technique. Toutefois, afin d'acheminer le message d'authentification émis par l'émetteur spécialisé ES au sein d'un protocole existant, il est possible de prévoir d'accoler ce message à un autre message protocolaire émis depuis le poste de travail du débiteur de prestation vers le site distant. En particulier, dans un mode d'authentification par mot de passe, on peut transmettre soit ce message d'authentification délivré par l'émetteur spécialisé à la place du mot de passe, soit ce message d'authentification accolé à ce mot de passe ou encore une combinaison selon une convention préétablie de l'un et l'autre des mots de passe et du message délivré par l'émetteur spécialisé ES.

Une deuxième application du procédé objet de la présente invention sera maintenant décrite en liaison avec la figure 5b.

Cette application peut être mise en oeuvre lors de l'utilisation d'un émetteur spécialisé ES dans les nouveaux modes de vente d'énergie électrique par exemple ou de tout autre fluide fourni à travers un réseau fixe par l'intermédiaire d'un compteur.

Ainsi que représenté à la figure 5b, l'abonné au service de distribution et de vente d'énergie, électrique par exemple, dispose d'appareils électriques EA auxquels au moins un récepteur est associé. L'appareil électrique EA est interconnecté au réseau de distribution basse tension d'énergie électrique par l'intermédiaire d'un branchement et d'un compteur permettant de délivrer l'énergie électrique à chaque appareil électrique EA sur l'installation domestique de l'utilisateur. Ce dernier est dans ce cas-là créancier de prestations.

D'une manière classique, les fournitures de fluides à travers un réseau de distribution sont comptées au point de livraison grâce au compteur précité. La facturation à l'abonné, c'est-à-dire au créancier de prestation, est établie en fonction des consommations au compteur et du tarif associé à son contrat de fourniture. Dans le cadre d'une économie libérale, les prestations de services de distribution, assurées par le gestionnaire du réseau, et de fourniture, assurées par le producteur ou le conditionneur du fluide, sont séparées. Le même point de livraison peut être le lieu de fourniture provenant de fournisseurs différents. A titre d'exemple non limitatif, on indique la prestation de service réalisée par différents opérateurs de télécommunication à partir d'une même ligne téléphonique. Dans ces conditions, il apparaît des fournitures distinctes selon les utilisations. Une telle situation se produit lors de la commercialisation d'appareils électriques associés à un contrat de fourniture d'énergie électrique. La fourniture d'énergie électrique est alors facturée à partir d'un comptage spécialisé ou au forfait. L'authentification de la localisation de la fourniture par rapport à un point de livraison donné est alors nécessaire.

Dans ce but, et ainsi que représenté en figure 5b, l'émetteur spécialisé ES permet d'assurer cette authentification par diffusion du message de localisation vers les compteurs et équipements propres à chaque fournisseur.

Le fournisseur considéré peut alors définir ses conditions de tarif applicables en fonction de la localisation et de contrats passés individuellement avec le créancier des prestations. L'équilibre entre énergie livrée au point de livraison et énergie fournie au client peut alors être établi avec certitude. Dans ces conditions, le mode de communication de l'émetteur spécialisé ES avec chaque appareil électrique EA est comparable à celui décrit dans le cadre de la figure 5a, bien que le créancier de prestation soit cette fois l'utilisateur et que le débiteur de prestation soit le site distant prestataire du service organisé pour la distribution d'énergie électrique ou autre. Dans ces conditions, une liaison par réseau ATM ou INTERNET par exemple peut être réalisée entre le site du créancier de prestation et le site distant du prestataire de service.

En outre, la figure 5b correspond également à une situation analogue dans laquelle un téléservice est exécuté à partir d'un site distant débiteur de prestation, le créancier de prestation étant tout utilisateur d'un appareil électrique EA muni d'un récepteur connecté par exemple au réseau de distribution d'énergie électrique.

D'une manière générale, le téléservice dans une telle situation est une action menée à distance par le prestataire de service sur l'installation du client en l'absence, le plus souvent, de toute intervention de ce dernier.

Pour exécuter le service précité, le prestataire doit toutefois s'assurer qu'il s'agit d'une intervention à la bonne adresse du client. Pour facturer son service, le prestataire doit établir qu'il est bien intervenu à distance sur l'installation du client et il doit bien entendu justifier de la durée de l'intervention et de la date de celle-ci. Dans les deux cas, le prestataire doit imposer un certain degré de garantie sur la localisation réelle de l'installation sur laquelle il intervient et sur la réalité de l'intervention.

Dans une telle situation, alors que la prestation peut être réalisée par le prestataire de service par l'intermédiaire du réseau INTERNET ou ATM pour une intervention sur un ordinateur par exemple, dès le début de l'intervention, l'ordinateur objet de l'intervention, c'est-à-dire l'appareil électrique EA constitué par cet ordinateur, envoie au prestataire de service sur le site distant le message d'authentification émis par l'émetteur spécialisé ES installé au voisinage de ce dernier, c'est-à-dire au voisinage du compteur lorsque l'installation électrique est concernée. Le prestataire de service peut ainsi vérifier l'authenticité du message reçu et justifier en particulier de la durée d'intervention, de la date, par exemple. Le mode de communication de l'émetteur spécialisé ES est alors comparable à celui décrit dans le cadre de la figure 5a.

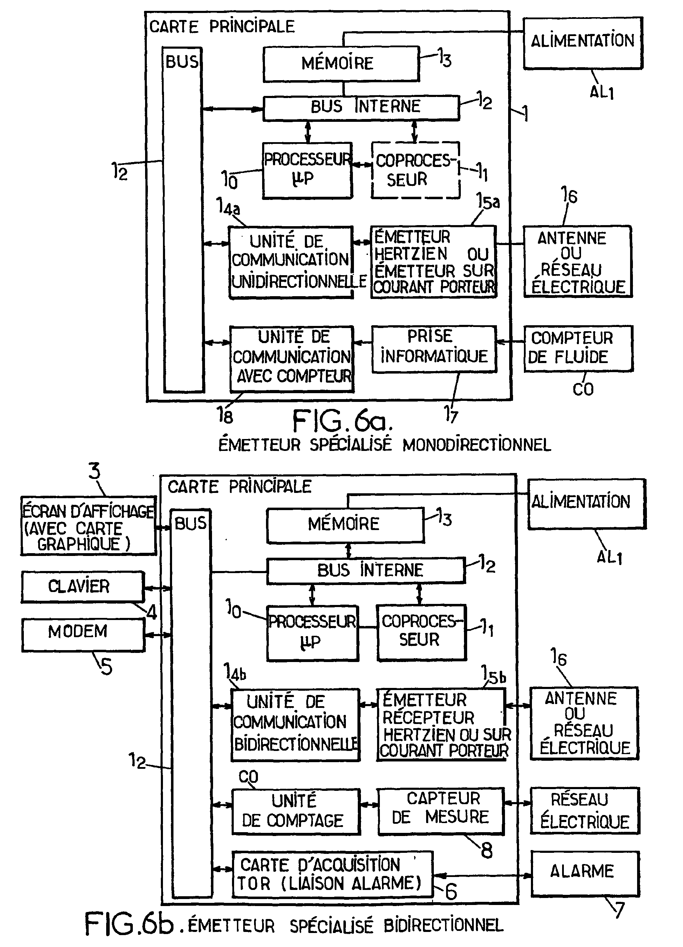

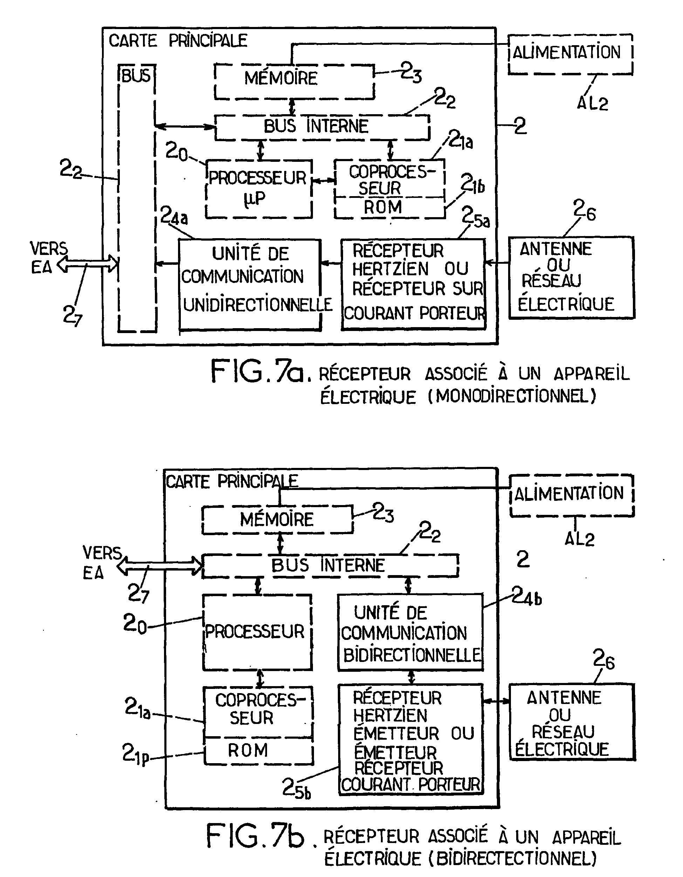

Une description plus détaillé d'un émetteur spécialisé respectivement d'un récepteur associé à un appareil électrique connecté à un réseau conformément à l'objet de la présente invention, ces dispositifs émetteur spécialisé et récepteur permettant bien entendu la mise en oeuvre du procédé objet de l'invention précédemment décrits dans la description, sera maintenant donnée en liaison avec les figures 6a, 6b et 7a, 7b.

D'une manière générale, on indique que dans une version la plus simple permettant la mise en oeuvre d'une communication monodirectionnelle, entre l'émetteur spécialisé précité et un récepteur associé à un appareil électrique connecté à un réseau donné, l'émetteur spécialisé, ainsi que représenté en figure 6a, peut être constitué sous la forme d'un équipement monobloc d'une taille réduite, n'excédant pas celle d'un cube de 20 cm d'arête environ.

Dans ces conditions, ainsi que représenté en figure 6a, l'émetteur spécialisé ES peut comprendre, outre une alimentation en énergie électrique externe, notée $AL_1$, une carte électronique 1 comportant une unité de calcul, ou microprocesseur, notée $\mu P$ et portant la référence $1_0$, ainsi que, pour la mise en oeuvre des calculs de signature et de certificat, soit d'un coprocesseur portant la référence $1_1$, soit d'une mémoire morte de type ROM connectée au microprocesseur $1_0$ précité. Le processeur $1_0$ et le coprocesseur ou la mémoire morte $1_1$ sont reliés par l'intermédiaire d'un BUS interne $1_2$ à une mémoire de travail notée $1_3$. La mémoire de travail peut être constituée par une mémoire RAM dans laquelle les programmes de calcul et de vérification de signature peuvent être chargés à partir de la mémoire ROM $1_1$ pour la mise en oeuvre des opérations de calcul et de vérification de signature par exemple.

En outre, l'émetteur spécialisé ES comporte une unité de communication unidirectionnelle portant la référence $1_4a$ et un module émetteur proprement dit, portant la référence $1_5a$, ce module émetteur, en fonction de l'application réalisée et du type de réseau communicant utilisé, pouvant consister en un émetteur hertzien, ou au contraire en un émetteur par courant porteur sur le réseau de distribution d'énergie électrique basse tension par exemple. L'unité de communication unidirectionnelle $1_4a$ est interconnectée au BUS interne $1_2$ ainsi qu'au module émetteur $1_5a$. Ce module émetteur est lui-même relié à une antenne lorsque l'émetteur est un émetteur hertzien ou respectivement au réseau électrique par un module de connexion $1_6$ lorsque l'émetteur est un émetteur sur courant porteur.

On comprend bien sûr que, sur appel des programmes de calcul de signature et de valeurs codées pour la constitution de l'information d'habilitation codée destinés à l'appareil électrique, ces programmes étant mémorisés dans la mémoire de type ROM $1_1$, les opérations de calcul et de vérification de signature peuvent être effectuées à partir de la mémoire de travail $1_3$ et de l'unité de calcul, le microprocesseur $1_0$. Les valeurs codées constitutives de l'information d'habilitation codée sont alors transmises à l'unité de communication unidirectionnelle $1_4a$ pour constituer des messages d'information codés, c'est-à-dire des messages comportant l'information d'habilitation codée précitée. L'émission de ces messages est ensuite réalisée par le module d'émission $1_5a$, soit sous forme hertzienne, soit sous forme de courant porteur par l'intermédiaire de l'antenne ou du module de connexion au réseau basse tension $1_6$.

De préférence, et dans un mode de réalisation spécifique représenté en figure 6a, l'émetteur spécialisé ES comprend en outre une prise informatique externe, notée $1_7$, permettant l'interconnexion du dispositif émetteur spécialisé avec un dispositif externe de comptage de fluide ou d'énergie, noté CO. La prise informatique externe peut être réalisée, à titre d'exemple non limitatif, par une liaison série RS 232 par exemple. En outre, un module de liaison $1_8$ constituant une unité de communication avec le compteur CO est prévu entre la prise informatique externe $1_7$ et le module de calcul constitué par le microprocesseur $1_0$, le coprocesseur de calcul de signature $1_1$ ou la mémoire ROM correspondante, et la mémoire vive $1_3$. Cette liaison est assurée par le BUS interne $1_2$. Ainsi, le module de calcul précité et en particulier le microprocesseur $1_0$ reçoit du compteur CO de fluide ou d'énergie une information de comptage permettant de coder le code de contrôle d'habilitation afin de constituer les messages d'information transmis.

Sur la figure 6b, on a représenté un émetteur spécialisé permettant une liaison bidirectionnelle avec l'appareil électrique EA soumis au contrôle d'habilitation lorsque le récepteur R associé à cet appareil électrique est lui-même équipé d'un module émetteur.

Dans un tel cas, l'émetteur spécialisé ES peut alors être réalisé sous la forme d'une carte dédiée associée à un ordinateur.

Sur la figure 6b, les mêmes références désignent les mêmes éléments que sur la figure 6a. Toutefois, l'unité de communication porte la référence $1_4b$ pour désigner une unité de communication bidirectionnelle permettant la sélection du mode opératoire de l'émetteur spécialisé soit en mode d'émission, soit en mode de réception. De la même manière, le module d'émission porte la référence $1_5b$, ce module d'émission étant en outre équipé d'un module de réception hertzien ou sur courant porteur. Ainsi, en fonction du mode opératoire retenu, en particulier pour l'échange de messages bidirectionnels tel que représenté précédemment dans la description en figure 4a, la commutation du mode d'émission en mode de réception est réalisée par l'intermédiaire du microprocesseur $1_0$ et d'un programme spécifique.

Dans le cas de la figure 6b, l'émetteur spécialisé peut être muni d'éléments plus spécifiques habituellement mis en oeuvre pour l'équipement de micro-ordinateurs tels qu'un écran d'affichage avec carte graphique, portant la référence 3, un clavier portant la référence 4 et un modem portant la référence 5, afin d'assurer une interconnexion avec le réseau téléphonique public commuté RTPC précédemment mentionné dans la description.

Dans le mode de réalisation représenté en figure 6b, on indique en outre que le compteur CO peut être intégré directement à la carte 1 dédiée constitutive de l'émetteur spécialisé ES. Dans ce cas, au compteur CO constitué par une unité de comptage spécifique, est associé un capteur de mesure directement connecté au réseau de distribution de fluide ou d'énergie tel que le réseau électrique par exemple. Le capteur de mesure porte la référence 8.

Enfin, une autre fonction spécifique peut être mise en oeuvre, cette fonction pouvant consister en un système d'alarme comportant une alarme externe, portant la référence 7, reliée à une carte d'acquisition et de liaison d'alarme, portant la référence 6. Le module d'alarme externe 7 est relié au BUS interne $1_2$ par l'intermédiaire de la carte d'acquisition et de liaison alarme 6.

L'architecture d'un récepteur R associé à un appareil électrique conformément à l'objet de la présente invention, sera maintenant décrite en liaison avec les figures 7a et 7b.

Le mode de réalisation de la figure 7a est un mode de réalisation minimum plus particulièrement destiné à des appareils électriques qui comportent ou non une fonction de gestion intelligente des fonctions de l'appareil électrique par microprocesseur. Ce récepteur peut alors être mis en oeuvre sur une carte électronique spécifique alimentée par une alimentation externe $AL_2$ ou, le cas échéant, par l'alimentation de l'appareil électrique par exemple.

Sur la figure 7a, les composants constitués par le microprocesseur $2_0$, le coprocesseur ou la mémoire morte ROM $2_1$, le BUS interne $2_2$, la mémoire vive $2_3$ sont rajoutés sur la carte électronique dédiée, le processeur $2_0$, le BUS interne $2_2$ et la mémoire $2_3$ pouvant toutefois être constitués par ceux de l'appareil électrique EA, lorsque celui-ci est constitué par un micro-ordinateur par exemple dans l'application au télétravail, ainsi que décrit précédemment dans la description.

Le récepteur représenté en figure 7a comprend en outre un module de réception des messages d'information codés comportant essentiellement une unité de communication unidirectionnelle $2_4a$, un récepteur de type hertzien ou récepteur sur courant porteur, portant la référence $2_5a$, et une antenne externe ou un module de connexion au réseau électrique dans le cas où la réception est assurée par courant porteur, cette antenne ou ce module de connexion portant la référence $2_6$. Les éléments $2_6$, $2_5a$ et $2_4a$ sont connectés en cascade, l'unité de communication unidirectionnelle $2_4a$ étant elle-même interconnectée au BUS interne $2_2$.

Ainsi qu'on l'observera en outre en figure 7a, le dispositif récepteur R comprend un module de décodage et de vérification de l'information d'habilitation codée contenu dans chaque message d'information reçu. Ce module de décodage et de vérification est avantageusement constitué par le microprocesseur de calcul $2_0$, bien entendu la mémoire de travail de type RAM $2_3$ ainsi que le coprocesseur ou la mémoire ROM portant la référence $2_1a$ dans laquelle sont mémorisés les programmes de calcul et de vérification de signature, ainsi que mentionné précédemment dans la description.

En outre, un module de commande d'habilitation ou de non-habilitation de l'appareil électrique EA en fonction de la vérification de l'information d'habilitation codée est également prévu. Ce module est constitué par le microprocesseur $2_0$, une mémoire morte ROM portant la référence $2_1b$ et bien entendu la mémoire de travail $2_3$. Ce module de commande est complété par une prise informatique portant la référence $2_7$ permettant d'envoyer des ordres de commande à l'appareil électrique EA et en particulier à des fonctions vitales de ce dernier. La prise $2_7$ peut, par exemple, être constituée par une prise de type liaison série, laquelle permet d'acheminer des messages de commande de verrouillage soit d'inhibition irréversible de fonctions vitales de l'appareil électrique soumis au contrôle d'habilitation, ainsi que décrit précédemment dans la description en liaison avec la figure 4a.

La mémoire ROM $2_1b$ peut comprendre avantageusement l'ensemble des programmes de commande de verrouillage ou d'inhibition irréversible destinés à l'appareil électrique EA.

Sur la figure 7b, on a représenté un récepteur associé à un appareil électrique dans lequel les mêmes références représentent les mêmes éléments que dans le cas du mode de réalisation de la figure 7a. Toutefois, ce récepteur est un récepteur plus élaboré, lequel permet la mise en oeuvre d'une liaison bidirectionnelle entre l'émetteur spécialisé et le récepteur associé à l'appareil électrique EA. Les différences vis-à-vis du mode de réalisation du récepteur représenté en figure 7a concernent l'unité de communication, portant la référence $2_4b$, laquelle est une unité de communication bidirectionnelle, et le module récepteur hertzien, portant la référence $2_5b$, ce module étant maintenant équipé d'un émetteur. Le module récepteur émetteur $2_5b$ est alors constitué soit par un module récepteur-émetteur hertzien ou sur courant porteur.

## Revendications

1. Procédé de contrôle d'habilitation d'un appareil électrique (EA) connecté à un réseau, à partir d'un émetteur spécialisé (ES) de messages d'information, cet appareil électrique étant équipé d'un récepteur (R) de messages d'information, ce procédé comportant au moins les étapes consistant :

- (A) à transmettre de l'émetteur spécialisé vers ledit appareil électrique un message d'information codé comportant au moins une information d'habilitation codée fonction d'un code de contrôle d'habilitation ;
- (B) à recevoir, au moyen dudit récepteur équipant ledit appareil électrique ledit message d'information ;
- (C) à décoder ledit message d'information codé en fonction de données spécifiques d'habilitation intégrées audit récepteur pour engendrer des informations d'habilitation décodées ;
- (D, E) à commander l'habilitation dudit appareil électrique si lesdites informations décodées vérifient lesdites données spécifiques d'habilitation intégrées ;
- (F) à commander la non habilitation dudit appareil électrique sinon, **caracterisé**

**en ce que** chaque message est signé, chaque message signé comportant un champ de données d'authentification signées, permettant sur vérification de signature de décider si lesdites informations vérifiées et décodées vérifient lesdites données spécifiques d'habilitation intégrées.

**2.** Procédé selon la revendication 1, **caractérisé en ce que** ledit code de contrôle d'habilitation comprend au moins un champ (CGLi) contenant une valeur numérique représentative d'une localisation géographique dudit appareil électrique appartenant à une zone de contrôle d'habilitation.

**3.** Procédé selon la revendication 1 ou 2, **caractérisé en ce que** ledit code de contrôle d'habilitation comprend au moins un champ (CPH) contenant une valeur numérique représentative d'une condition souscrite par l'utilisateur.

**4.** Procédé selon l'une des revendications 1 à 3, **caractérisé en ce que** celui-ci consiste à transmettre périodiquement ledit message d'information codé vers ledit appareil électrique.

**5.** Procédé selon l'une des revendications 1 à 4, **caractérisé en ce que** ledit réseau est constitué par l'un des réseaux parmi le groupe réseau informatique local, réseau informatique étendu, le réseau hertzien local, le réseau de radiotéléphonie cellulaire, le réseau de distribution d'énergie électrique équipé d'une transmission des messages par courants porteurs.

**6.** Procédé selon l'une des revendications 1 à 5, **caractérisé en ce que** chaque message d'information comporte au moins un champ de données représentatif d'une durée d'habilitation (FA) dudit appareil électrique.

**7.** Procédé selon l'une des revendications précédentes, **caractérisé en ce que** lesdites données comportent au moins une valeur fonction monotone croissante du temps permettant d'éviter le rejeu frauduleux.

**8.** Procédé selon l'une des revendications précédentes, **caractérisé en ce que**, avant la transmission de l'émetteur spécialisé vers l'appareil électrique dudit message codé comportant l'information d'habilitation, le procédé comporte une étape préalable dans laquelle l'appareil électrique envoie d'abord un message d'allégeance (MAL) à destination de l'émetteur spécialisé.

**9.** Procédé selon l'une des revendications précédentes, dans lequel l'appareil électrique est :

- à disposition d'un débiteur de prestation, et
- relié à un site distant constituant une autorité de contrôle de la prestation,

**caractérisé en ce que** le procédé comporte en outre une étape de vérification de l'authentification de l'émetteur spécialisé par ledit site distant.

**10.** Procédé selon l'une des revendications précédentes, **caractérisé en ce que** celui-ci comporte en outre des étapes de gestion du procédé de contrôle comprenant au moins l'une des étapes suivantes :

- (1) transmettre de l'émetteur spécialisé audit récepteur un message d'initialisation (MID) comportant au moins lesdites données spécifiques d'habilitation intégrées ;
- (2) transmettre, sur requête dudit récepteur, de l'émetteur audit récepteur, un message de levée de contrôle d'habilitation (MLCH), ledit récepteur, sur réception dudit message de levée de contrôle d'habilitation étant remis en fonctionnement libre ;
- (3) transmettre audit récepteur, sur requête d'un élément tiers appartenant audit périmètre de contrôle et assurant une surveillance de ce périmètre de contrôle, un message de verrouillage sur site (MVER) dudit appareil électrique, ledit message de verrouillage sur site provoquant le blocage de toute fonction vitale dudit appareil électrique ;
- (4) transmettre périodiquement audit récepteur un message d'authentification (MA) dudit émetteur ;
- (5) transmettre du récepteur à l'émetteur un message d'allégeance (MAL), comportant un code d'identification dudit récepteur ;
- transmettre de l'émetteur au récepteur, en l'absence de vérification par l'émetteur dudit message d'allégeance, un message de commande de condamnation dudit récepteur.

**11.** Procédé selon l'une des revendications 6 à 10, **caractérisé en ce que**, pour un réseau de distribution d'énergie électrique équipé d'une transmission de messages par courants porteurs, ledit émetteur est placé sur un site de ce réseau tel que transformateur HT/BT, compteur de consommation (CO) chez un abonné.

**12.** Procédé selon la revendication 11, **caractérisé en ce que** lesdits messages d'information comportent au moins un champ de données représentatif d'un code d'identification du transformateur HT/BT, ou du compteur de consommation.

**13.** Procédé selon l'une des revendications 11 ou 12, **caractérisé en ce que** lesdits messages d'information comportent au moins un champ de données représentatif de la valeur de comptage (ICO) dudit compteur de consommation (CO).

**14.** Dispositif émetteur spécialisé (ES) pour la mise en oeuvre du procédé selon l'une des revendications 1 à 13, pour le contrôle d'habilitation d'un appareil électrique (EA) connecté à un réseau, cet appareil électrique étant équipé d'un récepteur (R) de messages d'information et cet émetteur spécialisé étant adapté pour permettre la transmission vers cet appareil électrique d'un message d'information codé comportant au moins une information d'habilitation codée de cet appareil électrique fonction d'un code de contrôle d'habilitation, ledit dispositif émetteur spécialisé comportant au moins :

- des moyens de calcul $(1_0, 1_1)$ d'un code de contrôle d'habilitation associé à au moins un appareil électrique ;
- des moyens d'émission $1_{4a}, 1_{5a}, 1_{4b}, 1_{5b}$ sur ledit réseau de messages d'information codés contenant ladite information d'habilitation codée fonction de ce code de contrôle d'habilitation **caractérisé en ce que** les moyens d'emission sont aptes pour emettre chaque message signé, comportant un champ de données d'authentification signées.

**15.** Dispositif selon la revendication 14, **caractérisé en ce que** celui-ci comporte en outre :

- une prise informatique externe $(1_7)$ permettant l'interconnexion dudit dispositif avec un dispositif de comptage externe de fluide ou d'énergie (CO);
- un module de liaison $(1_8)$ interconnecté entre la prise informatique externe et lesdits moyens de calcul d'un code de contrôle, lesdits moyens de calcul recevant dudit compteur de fluide ou d'énergie une information de comptage permettant de coder ledit code de contrôle d'habilitation.

**16.** Dispositif récepteur (R) équipant un appareil électrique (EA) connecté à un réseau pour la mise en oeuvre du procédé selon l'une des revendications 1 à 13, ce récepteur recevant des messages d'information codés comportant au moins une information d'habilitation codée de cet appareil électrique émise par un émetteur spécialisé (ES), ledit récepteur comportant au moins :

- des moyens de réception $2_{4a}, 2_{5a}, 2_{4b}, 2_{5b}$ desdits messages d'information codés ;
- des moyens de décodage et de vérification $2_0, 2_{1a}$ de ladite information d'habilitation codée ;
- des moyens de commande d'habilitation $2_0, 2_{1b}, 2_3$ respectivement de non habilitation dudit appareil électrique en fonction de la vérification de ladite information d'habilitation codée **caracterisé en ce que** les moyens de réception sont aptes pour recevoir des messages signés, chaque message signé comportant un champ de données d'authentification signées.

**17.** Dispositif récepteur selon la revendication 16, **caractérisé en ce que** lesdits moyens d'émission de l'émetteur spécialisé étant équipés d'un récepteur et lesdits moyens de réception du récepteur associé à l'appareil électrique étant équipés d'un émetteur, la communication entre l'émetteur spécialisé et le récepteur associé à l'appareil électrique est bidirectionnelle.

**Claims**

1. A method for monitoring authorization of an electrical apparatus (EA) connected to a network, on the basis of a specialized transmitter (ES) of information messages, this electrical apparatus being equipped with a receiver (R) of information messages, said method comprising the steps of:

(A) sending from the specialized transmitter to said electrical apparatus a coded information message comprising at least one coded authorization information item dependent on an authorization monitoring code;

(B) receiving said information message by means of said receiver with which said electrical apparatus is equipped;

(C) decoding said coded information message as a function of specific authorization data integrated into said receiver so as to generate decoded authorization information;

(D,E) instructing the authorization of said electrical apparatus if said decoded information satisfies said specific integrated authorization data;

(F) in instructing the non-authorization of said electrical apparatus otherwise,

**characterized in that** each message is signed, each signed message comprising a field of signed authentication data, making it possible upon verification of signature to decide whether said verified and decoded information satisfies said specific integrated authorization data.

2. The method as claimed in claim 1, **characterized in that** said authorization monitoring code comprises at least one field (CGLi) containing a numerical value representative of a geographical location of said electrical apparatus belonging to an authorization monitoring zone.

3. The method as claimed in claim 1 or 2, **characterized in that** said authorization monitoring code comprises at least one field (CPH) containing a numerical value representative of a condition undersigned by the user.

4. The method as claimed in one of claims 1 to 3, **characterized in that** it consists in periodically sending said coded information message to said electrical apparatus.

5. The method as claimed in one of claims 1 to 4, **characterized in that** said network consists of one of the networks from the group local computer network, extended computer network, the local Hertzian network, the cellular radio telephony network, the electrical energy distribution network equipped with sending of messages by carrier currents.

6. The method as claimed in one of claims 1 to 5, **characterized in that** each information message comprises at least one data field representative of a duration of authorization (FA) of said electrical apparatus.

7. The method as claimed in one of the preceding claims, **characterized in that** said data comprise at least one monitonic increasing time-dependent value making it possible to avoid fraudulent replay.

8. The method as claimed in one of the preceding claims, **characterized in that,** before the transmission from the specialized transmitter to the electrical apparatus of said coded message comprising the authorization information item, the method comprises a prior step in which the electrical apparatus sends first an allegiance message (MAL) to the specialized transmitter.

9. The method as claimed in one of the preceding claims, in which the electrical apparatus is:

- at the disposal of a provision debtor, and
- linked to a remote site constituting a provision monitoring authority,

**characterized in that** said method furthermore comprises a step of verification of the authentication of the specialized transmitter by said remote site.

10. The method as claimed in one of the preceding claims, **characterized in that** it furthermore comprises steps for managing the monitoring method consisting at least in:

(1)- sending from the specialized transmitter to said receiver an initialization message (MID) comprising at least said specific integrated authorization data;

(2)- sending, on request of said receiver, from the transmitter to said receiver, an authorization monitoring removal message (MLCH), said receiver, on receipt of said authorization monitoring removal message being reset to unrestricted operation;

(3)- sending to said receiver, on request of a third party element belonging to said monitoring perimeter and ensuring surveillance of this monitoring perimeter, a message of on-site blocking (MVER) of said electrical apparatus, said on-site blocking message causing the disabling of any vital function of said electrical apparatus;

(4)- periodically sending said receiver a message for authentication (MA) of said transmitter;

(5)- sending from the receiver to the transmitter an allegiance message (MAL), comprising an identification code of said receiver;

- sending from the transmitter to the receiver, in the absence of verification by the transmitter of said allegiance message, a message instructing lockup of said receiver.

11. The method as claimed in one of claims 6 to 10, **characterized in that,** for an electrical energy distribution network equipped with sending of messages by carrier currents, said transmitter is placed on a site of this network such as HV/LV transformer, meter of consumption (CO) at a subscriber's premises.

12. The method as claimed in claim 11, **characterized in that** said information messages comprise at least one data field representative of an identification code of the HV/LV transformer, or of the consumption meter.

13. The method as claimed in one of claims 11 or 12, **characterized in that** said information messages comprise at least one data field representative of the metering value (ICO) of said consumption meter (CO).

14. A specialized transmitter device (ES) for the implementation of the method for monitoring authorization of an electrical apparatus connected to a network according to one of claims 1 to 13, this electrical apparatus (EA) being equipped with a receiver (R) of information messages and this specialized transmitter being adapted to allow the sending to this electrical apparatus of a coded information message comprising at least one coded authorization information item for this electrical apparatus dependent on an authorization monitoring code, said specialized transmitter device comprising at least:

- means for calculating $(1_0, 1_1)$ an authorization monitoring code associated with at least one electrical apparatus;
- means for transmitting $(1_{4a}, 1_{5a}, 1_{4b}, 1_{5b},)$ on said network coded information messages containing said coded authorization information item dependent on this authorization monitoring code,

**characterized in that** the transmitting means are adapted to transmit each message as a signed message comprising a signed authentication data field.

15. The device as claimed in claim 14, **characterized in that** it furthermore comprises:

- an external computer socket $(1_7)$ allowing the interconnection of said device with a device for external metering of fluid or energy $(1_8)$;
- a linking module $(1_9)$ interconnected between the external computer socket and said means for calculating a monitoring code, said means of calculation receiving from said fluid or energy meter a metering information item making it possible to code said authorization monitoring code.

16. A receiver device (R) equipping an electrical apparatus connected to a network for the implementation of the method according to one of claims 1 to 13, this receiver receiving coded information messages comprising at least one coded authorization information item for this electrical apparatus, transmitted by a specialized transmitter (ES), said receiver comprising at least:

- means for receiving $(2_{4a}, 2_{5a}, 2_{4b}, 2_{5b})$ said coded information messages;
- means for decoding and verifying $(2_0, 2_{1a})$ said coded authorization information item;
- means for instructing authorization $(2_0, 2_{1b}, 2_3)$ respectively non-authorization of said electrical apparatus as a function of the verification of said coded authorization information item,

**characterized in that** the receiving means are adapted to receive signed messages, each signed message comprising a signed authentication data field.

**17.** A receiver device according to claim 16, **characterized in that** said means of transmission of the specialized transmitter being equipped with a receiver and said means of reception of the receiver associated with the electrical apparatus being equipped with a transmitter, the communication between the specialized transmitter and the receiver associated with the electrical apparatus is bidirectional.

## Patentansprüche

**1.** Verfahren zur Steuerung der Betriebsfreigabe eines elektrischen Gerätes (EA), welches an ein Netzwerk angeschlossen ist, ausgehend von einem spezialisierten Sender (ES) von Informationsmitteilungen, wobei das elektrische Gerät ausgestattet ist mit einem Empfänger (R) von Informationsmitteilungen, wobei das Verfahren wenigstens die Schritte umfasst, bestehend aus:

- (A) des Übertragens einer codierten Informationsmitteilung, welche wenigstens eine kodierte Betriebsfreigabeinformation entsprechend eines Betriebsfreigabesteuerungscodes umfasst, von dem spezialisierten Sender über das elektrische Gerät;
- (B) des Empfangens der Informationsmitteilung mit Hilfe des Empfängers, welcher in dem elektrischen Gerät versehen ist;
- (C) des Decodierens der Informationsmitteilung, welche entsprechend spezifischer Betriebsfreigabedaten codiert ist, welche in dem Empfänger integriert sind, zum Erzeugen von decodierten Betriebsfreigabeinformationen;
- (D, E) des Befehlens der Betriebsfreigabe des elektrischen Gerätes, wenn die decodierten Informationen die spezifischen integrierten Betriebsfreigabedaten verifizieren;
- (F) des Befehlens der Nichtbetriebsfreigabe des elektrischen Gerätes, wenn nicht,

**dadurch gekennzeichnet, dass** jede Mitteilung signiert ist, wobei jede signierte Mitteilung ein Feld signierter Authentifizierungsdaten umfasst, welche durch Verifizierung der Signatur erlauben zu entscheiden, ob die verifizierten und decodierten Informationen die spezifischen integrierten Betriebsfreigabedaten verifizieren.

**2.** Verfahren nach Anspruch 1, **dadurch gekennzeichnet, dass** der Betriebsfreigabesteuerungscode wenigstens ein Feld (CGLi) umfasst, welches einen numerischen Wert enthält, repräsentativ für eine geografische Lokalisierung des elektrischen Gerätes, welches zu einer Betriebsfreigabesteuerungszone gehört.

**3.** Verfahren nach Anspruch 1 oder 2, **dadurch gekennzeichnet, dass** der Betriebsfreigabesteuerungscode wenigstens ein Feld (CPH) umfasst, welches einen numerischen Wert enthält, repräsentativ für einen von dem Benutzer unterzeichneten Zustand.

**4.** Verfahren nach einem der Ansprüche 1 bis 3, **dadurch gekennzeichnet, dass** es aus dem periodischen Übertragen der codierten Informationsmitteilung über das elektrische Gerät besteht.

**5.** Verfahren nach einem der Ansprüche 1 bis 4, **dadurch gekennzeichnet, dass** das Netz gebildet wird aus einem der Netzwerke aus der Gruppe von lokalem Netzwerk, großräumigem Netzwerk, drahtlosem lokalem Netzwerk, zellularem Radiofunknetzwerk, Verteilernetzwerk für elektrische Energie mit einer Übertragung der Mitteilungen über Trägerströme.

**6.** Verfahren nach einem der Ansprüche 1 bis 5, **dadurch gekennzeichnet, dass** jede Informationsmitteilung wenigstens ein Feld von Daten umfasst, repräsentativ für eine Betriebsfreigabedauer (FA) des elektrischen Gerätes.

**7.** Verfahren nach einem der vorhergehenden Ansprüche, **dadurch gekennzeichnet, dass** die Daten wenigstens einen monoton ansteigenden Funktionswert der Zeit umfassen, welcher es erlaubt, den betrügerischen Angriff zu verhindern.

**8.** Verfahren nach einem der vorhergehenden Ansprüche, **dadurch gekennzeichnet, dass**, vor der Übertragung der codierten Mitteilung, welche die Betriebsfreigabeinformation umfasst, von dem spezialisierten Sender über das elektrische Gerät, das Verfahren einen vorherigen Schritt umfasst, in welchem das elektrische Gerät zuerst eine Treuemitteilung (MAL) zum spezialisierten Sender schickt.

**9.** Verfahren nach einem der vorhergehenden Ansprüche, in welchem das elektrische Gerät:

- einem Dienstleistungsschuldner zur Verfügung steht, und
- verbunden ist mit einem entfernten Standort, welcher Bestandteil einer Dienstleistungssteuerungsautorität ist,

**dadurch gekennzeichnet, dass** das Verfahren des Weiteren einen Schritt der Verifizierung der Authentifizierung des spezialisierten Senders über den entfernten Standort umfasst.

10. Verfahren nach einem der vorhergehenden Ansprüche, **dadurch gekennzeichnet, dass** es des Weiteren die Schritte der Verwaltung des Steuerungsverfahrens umfasst, umfassend wenigstens einen der folgenden Schritte:

- (1) Übertragen einer Initialisierungsmitteilung (MID), welche wenigstens die spezifischen integrierten Betriebsfreigabedaten umfasst, von dem spezialisierten Sender zum Empfänger;
- (2) Übertragen, auf Anfrage des Empfängers, einer Mitteilung der Aufhebung der Betriebsfreigabesteuerung (MLCH) von dem Sender zum Empfänger, wobei der Empfänger, bei Empfang der Mitteilung der Aufhebung der Betriebsfreigabesteuerung, wieder in einen freien Betrieb versetzt wird;
- (3) Übertragen, auf Anfrage eines dritten Elementes, welches zu einem Steuerungsumfang gehört und eine Überwachung des Steuerungsumfangs sichert, einer Mitteilung der Sperre auf Standort (MVER) des elektrischen Gerätes zum Empfänger, wobei die Mitteilung der Sperre auf Standort die Blockierung der gesamten vitalen Funktion des elektrischen Gerätes bewirkt;
- (4) periodisches Übertragen einer Authentifizierungsmitteilung (MA) vom Sender zum Empfänger;
- (5) Übertragen einer Treuemitteilung (MAL), welche einen Identifizierungscode des Empfängers umfasst, vom Empfänger zum Sender;
- Übertragen, bei Ausbleiben der Verifizierung der Treuemitteilung durch den Sender, einer Mitteilung des Befehls der Verriegelung des Empfängers von dem Sender zum Empfänger.

11. Verfahren nach einem der Ansprüche 6 bis 7, **dadurch gekennzeichnet, dass** für ein Verteilernetzwerk für elektrische Energie mit einer Übertragung der Mitteilungen über Trägerströme der Sender auf einem Standort des Netzwerkes platziert ist, wie Transformator HT/BT, Verbrauchszähler (CO) bei einem Bezieher.

12. Verfahren nach Anspruch 11, **dadurch gekennzeichnet, dass** die Informationsmitteilungen wenigstens ein Feld von Daten umfassen, repräsentativ für einen Identifizierungscode des Transformators HT/BT oder des Verbrauchszählers.

13. Verfahren nach einem der Ansprüche 11 oder 12, **dadurch gekennzeichnet, dass** die Informationsmitteilungen wenigstens ein Feld von Daten umfassen, repräsentativ für den Zählwert (ICO) des Verbrauchszählers (CO).

14. Spezialisierte Sendevorrichtung (ES) für die Umsetzung des Verfahrens nach einem der Ansprüche 1 bis 13, für die Steuerung der Betriebsfreigabe eines elektrischen Gerätes (EA), welches an ein Netzwerk angeschlossen ist, wobei das elektrische Gerät mit einem Empfänger (R) von Informationsmitteilungen versehen ist, und wobei der spezialisierte Sender angepasst ist, um eine Übertragung einer codierten Information über das elektrische Gerät zu erlauben, welche wenigstens eine codierte Betriebsfreigabeinformation des elektrischen Gerätes umfasst, entsprechend eines Betriebsfreigabesteuerungscodes, wobei die spezialisierte Sendevorrichtung wenigstens umfasst:

- Berechnungsmittel (10, 11) eines Betriebsfreigabesteuerungscodes, welche mit wenigstens einem elektrischen Gerät verbunden sind;
- Mittel zum Senden (14a, 15a, 14b, 15b) von codierten Informationsmitteilungen auf dem Netzwerk, welche die codierte Betriebsfreigabeinformation umfassen, entsprechend dem Betriebsfreigabesteuerungscode, **dadurch gekennzeichnet, dass** die Mittel zum Senden geeignet sind, um jede signierte Mitteilung zu senden, welche ein Feld von signierten Authentifizierungsdaten umfasst.

15. Vorrichtung nach Anspruch 14, **dadurch gekennzeichnet, dass** diese des Weiteren umfasst:

- einen externen Anschluss (17), welcher die Zwischenverbindung der Vorrichtung mit einer externen Vorrichtung zum Zählen von Flüssigkeit oder Energie (COi) erlaubt;
- ein Verbindungsmodul (18), welches zwischen dem externen Anschluss und den Berechnungsmitteln eines Steuerungscodes verbunden ist, wobei die Berechnungsmittel eine Zählinformation von dem Flüssigkeits- oder Energiezähler erhalten, welche es erlaubt, den Betriebsfreigabesteuerungscode zu codieren.

16. Empfangsvorrichtung (R), welche mit einem elektrischen Gerät (EA) versehen ist, welches an ein Netzwerk angeschlossen ist, für die Umsetzung des Verfahrens nach einem der Ansprüche 1 bis 13, wobei der Empfänger codierte Informationsmitteilungen empfängt, welche wenigstens eine codierte Betriebsfreigabeinformation des elektrischen Gerätes umfassen, gesendet von einem spezialisierten Sender (ES), wobei der Empfänger wenigstens umfasst:

- Empfangsmittel (24a, 25a, 24b, 25b) der codierten Informationsmitteilungen;
- Decodierungs- und Verifizierungsmittel (20, 21a) der codierten Betriebsfreigabeinformation;
- Mittel zum Befehlen der Betriebsfreigabe (20, 21b, 23), beziehungsweise der Nichtbetriebsfreigabe, des elektrischen Gerätes entsprechend der Verifizierung der codierten Betriebsfreigabeinformation, **dadurch gekennzeichnet, dass** die Empfangsmittel geeignet sind, um die signierten Mitteilungen zu empfangen, wobei jede signierte Mitteilung ein Feld von signierten Authentifizierungsdaten umfasst.

17. Empfangsvorrichtung nach Anspruch 16, **dadurch gekennzeichnet, dass** die Sendemittel des spezialisierten Senders mit einem Empfänger versehen sind, und die Empfangsmittel des Empfängers, welcher mit dem elektrischen Gerät verbunden ist, mit einem Sender versehen sind, wobei die Kommunikation zwischen dem spezialisierten Sender und dem Empfänger, welcher mit dem elektrischen Gerät verbunden ist, bidirektional ist.

APPAREIL
ÉLECTRIQUE EA
CONTENANT RÉCEPTEUR R
ÉMETTEUR SPÉCIALISÉ
E S

TRANSMISSION DE ES
VERS EA D'UN MESSAGE
CODÉ M I

A

ÉMETTEUR
SPÉCIALISÉ E S

RÉCEPTION DE MI CODÉ

B

DÉCODAGE DE MI CODÉ
À PARTIR DE DONNÉES
SPÉCIFIQUES
D'HABILITATION D S
POUR ENGENDRER DIS

C

D

− DS ≡ DIS? +

F

NON HABILITATION
DE EA

E

HABILITATION
DE EA

# FIG.1.

FIG.2a.

FIG.2b.

CHAMP LOCALISATION     CHAMP CONDITION

$S_{ES} = S_{KESPR}(HO, INES, DA_1)$

FIG.3a.

I· $V_{KACPU}(S_{AC})$

II $V_{KESPU}(S_{ES})$

FIG.3b.

$S_{ES} = S_{KESPR} (HO, INES, DA_1)$

CO
NCO, FA, ICO

INES
HO
NCO, FA

ES

$\mathscr{C}ert(3)$

| (1) | (2) | $K_{ESPU}$ | NAC | DV | $K_{ACPU}$ | $DA_2$ | SAC |

MI CODÉ {
HO, INES, NCO, ICO, FA    EN CLAIR (1)
HO, INES, NCO, ICO, FA    SIGNÉ (2)
$\mathscr{C}ert(3)$         $DA_1$
}

EA

R $K_{ACPU}$

I
II

I $\mho_{KAPCU} (S_{AC})$

II $\mho_{KESPU} (S_{ES})$

EP 1 275 188 B1

ES
RES                  R, EA
                          EL

(1)          M,ID

CONTRÔLE
HABILITATION
ACTIVÉ

RET

MLI

(2)        MRLH

MLCH

REMISE EN
FONCTIONNEMENT
LIBRE DE E A

RET

MVER

(3)

BLOCAGE DE
TOUTE FONCTION
DE EA

MA

(4)

(5)        MRAL

t

$\mathcal{V}$(MAL)      MAL      t

Si $\mathcal{V}$(MAL)=0      CONDAMNATION
MC            EA

t                      t

# FIG.4a.

RÉSEAU BT PRINCIPAL

POSTE HT/BT
CONCENTRATEUR

ICC

ICC_R_A

ICC_R_C          ICC

RÉSEAU BT
SECONDAIRE II

R_EL
E A

ES

RTPC

ICC_R_B

RÉSEAU BT
SECONDAIRE I

ICC_R_D

RÉSEAU BT
SECONDAIRE III

CENTRE DE
GESTION

( TIERS DE )
( CONFIANCE )

FIG.4b.

ES

COMPTEUR

CRÉANCIER DE
PRESTATION

SITE DISTANT
AUTORITÉ DE
CONTRÔLE

LIGNE DOMESTIQUE

RÉSEAU ATM

DÉBITEUR DE PRESTATION

R,EA

## FIG.5a.

ES

SITE DISTANT
PRESTATAIRE
DE SERVICE

DÉBITEUR DE
PRESTATION

COMPTEUR

R,EA

RÉSEAU ATM

CRÉANCIER DE
PRESTATION

## FIG.5b.

CARTE PRINCIPALE

BUS

MÉMOIRE 13

BUS INTERNE 12

1

ALIMENTATION

AL1

PROCESSEUR µP 10

COPROCES-SEUR 11

12

14a

UNITÉ DE COMMUNICATION UNIDIRECTIONNELLE

15a

ÉMETTEUR HERTZIEN OU ÉMETTEUR SUR COURANT PORTEUR

16

ANTENNE OU RÉSEAU ÉLECTRIQUE

UNITÉ DE COMMUNICATION AVEC COMPTEUR

18

PRISE INFORMATIQUE

17

COMPTEUR DE FLUIDE

CO

## FIG.6a.
ÉMETTEUR SPÉCIALISÉ MONODIRECTIONNEL

3

CARTE PRINCIPALE

ÉCRAN D'AFFICHAGE (AVEC CARTE GRAPHIQUE)

BUS

MÉMOIRE 13

ALIMENTATION

AL1

CLAVIER

4

MODEM

5

BUS INTERNE 12

10 PROCESSEUR µP

COPROCES-SEUR 11

12

14b

UNITÉ DE COMMUNICATION BIDIRECTIONNELLE

15b

ÉMETTEUR RÉCEPTEUR HERTZIEN OU SUR COURANT PORTEUR

16

ANTENNE OU RÉSEAU ÉLECTRIQUE

CO

UNITÉ DE COMPTAGE

CAPTEUR DE MESURE

8

RÉSEAU ÉLECTRIQUE

CARTE D'ACQUISITION TOR (LIAISON ALARME)

6

ALARME

7

## FIG.6b. ÉMETTEUR SPÉCIALISÉ BIDIRECTIONNEL

**CARTE PRINCIPALE**

MÉMOIRE $2_3$

ALIMENTATION

AL2

BUS

$2_2$

BUS INTERNE

$2_0$

PROCESSEUR μP

COPROCES-SEUR $2_{1a}$

$2_{1b}$ ROM

$2_2$

2

$2_{4a}$

$2_{5a}$

$2_6$

VERS EA

$2_7$

UNITÉ DE COMMUNICATION UNIDIRECTIONNELLE

RÉCEPTEUR HERTZIEN OU RÉCEPTEUR SUR COURANT PORTEUR

ANTENNE OU RÉSEAU ÉLECTRIQUE

FIG.7a. RÉCEPTEUR ASSOCIÉ À UN APPAREIL ÉLECTRIQUE (MONODIRECTIONNEL)

**CARTE PRINCIPALE**

MÉMOIRE $2_3$

ALIMENTATION

AL2

VERS EA

$2_7$

$2_0$

BUS INTERNE $2_2$

2

PROCESSEUR

UNITÉ DE COMMUNICATION BIDIRECTIONNELLE $2_{4b}$

$2_6$

$2_{1a}$

COPROCES-SEUR

$2_{1p}$

ROM

RÉCEPTEUR HERTZIEN ÉMETTEUR OU ÉMETTEUR RÉCEPTEUR COURANT PORTEUR

ANTENNE OU RÉSEAU ÉLECTRIQUE

$2_{5b}$

FIG.7b. RÉCEPTEUR ASSOCIÉ À UN APPAREIL ÉLECTRIQUE (BIDIRECTECTIONNEL)

**EP 1 275 188 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0005820 A
- WO 9817013 A